# EUROPÄISCHE PATENTSCHRIFT

(11) **EP 1 979 265 B1**
(45) Veröffentlichungstag und Bekanntmachung des Hinweises auf die Patenterteilung: **20.10.2010**
(21) Anmeldenummer: 07702885.0
(22) Anmeldetag: 19.01.2007
(51) Int. Cl.: B67D 7/02, F16L 37/413

(54) **VERBINDUNGSBAUGRUPPE ZUR VERBINDUNG EINES AUSGANGSBEHÄLTERS UND EINES ZIELBEHÄLTERS**
CONNECTION SUBASSEMBLY FOR CONNECTING A SUPPLY CONTAINER TO A TARGET CONTAINER
MODULE DE RACCORDEMENT POUR RACCORDER UN CONTENANT DE DÉPART ET UN CONTENANT CIBLE

(30) Priorität: 24.01.2006 DE 202006001319 U; 14.06.2006 DE 202006009585 U
(43) Veröffentlichungstag der Anmeldung: 15.10.2008
(73) Patentinhaber: Kämpf, Ralf, 96355 Tettau (DE)
(72) Erfinder: Kämpf, Ralf, 96355 Tettau (DE)
(74) Vertreter: Bungartz, Klaus Peter
(86) Internationale Anmeldenummer: PCT/EP2007/000453
(87) Internationale Veröffentlichungsnummer: WO 2007/085381

(56) Entgegenhaltungen:
- WO-A-00/76905
- DE-A1- 1 475 664
- US-A- 5 249 611
- US-A- 5 467 806
- US-A- 5 694 991
- US-B1- 6 478 058
- US-B1- 6 478 058

## Beschreibung

Die Erfindung betrifft eine Verbindungsbaugruppe zur Verbindung eines Ausgangsbehälters und eines Zielbehälters, insbesondere zum Nachfüllen von Betriebsstoffen bei Kraftfahrzeugen.

Derartige Verbindungsbaugruppen sind zum Beispiel aus der US6478058 und der US5249611 bekannt.

Eine solche Verbindungsbaugruppe ermöglicht die Befüllung des Zielbehälters mit einem Medium wie einer Flüssigkeit oder einem klein gekörnten, rieselfähigen Material. Der Ausgangsbehälter und der Zielbehälter werden dabei durch die Verbindungsgruppe derart miteinander verbunden, dass möglichst kein Verlust von Teilen des Mediums zu befürchten ist. Speziell können Betriebsstoffe von Kraftfahrzeugen, insbesondere Additive, um eine schadstoffarme Verbrennung zu erreichen, aus einem kleinen handhabbaren Ausgangsbehälter in einen in einen im Kraftfahrzeug eingebauten Zielbehälter eingefüllt werden.

Eine einfache Möglichkeit stellt dabei die Verbindung mittels eines beidseitig befestigten Schlauchs dar. Nachteilig ist dabei, dass es je nach Lage des Ausgangs- und des Zielbehälters zueinander beim Öffnen des Ausgangsbehälters oder beim Trennen der Schlauchverbindung zum Verlust von Teilen des Mediums kommen kann. Dies ist insbesondere bei teuren oder beispielsweise giftigen Medien ein Nachteil.

Zum Einfüllen eines Mediums in den Zielbehälter kann auch ein Trichter als Ausgangsbehälter dienen. Als Verbindungsbaugruppe weist ein solcher Trichter zur Befestigung an einem Ansatzstück des Zielbehälters üblicherweise ein Außengewinde oder einen rohrförmigen Auslassabschnitt auf, der in das Ansatzstück des Zielbehälters eingeschoben wird. Nachteilig hierbei ist, dass für den Fall, dass im Trichter Medium verbleibt, dieses beim Trennen des Trichters vom Zielbehälter entweichen kann, da zum Einen Reste aus dem Trichter auslaufen und zum Anderen der Zielbehälter überlaufen kann.

Aufgabe der Erfindung ist es, eine Verbindungsbaugruppe zur Verfügung zu stellen, die es ermöglicht, Medium aus einem Ausgangsbehälter ohne Verlust von Teilen des Mediums in einen Zielbehälter zu füllen.

Erfindungsgemäß wird dies durch eine Verbindungsbaugruppe gemäß Auspruch 1

Der Ausgangsbehälter und der Zielbehälter dienen der Aufnahme von Medien, wie insbesondere Flüssigkeiten und klein gekörnten bzw. rieselfähigen Stoffen. Bei Erstbefüllung, Nachbefüllung oder Umfüllung in den Zielbehälter sowie zum Mischen von Mehrkomponentenmedien im Zielbehälter kann der Ausgangsbehälter fallweise mittels der Verbindungsbaugruppe mit dem Zielbehälter verbunden werden. Unter Zielbehälter sind im Zusammenhang mit dieser Erfindung beispielsweise Tanks, Kanister oder auch Rohr- oder Schlauchleitungen zur Weiterleitung des Mediums zu verstehen. Als Ausgangsbehälter kommen daneben auch Trichter in Betracht. Das Ansatzstück am Zielbehälter kann je nach Ausführungsform der Erfindung eine einfache Öffnung oder auch ein komplexeres Ansatzstück wie ein Rohrabschnitt mit Außengewinde oder ein Teil eines Bajonettverschlusses sein. Anstelle einer offenen ersten Stirnseite des Auslasszylinders kann im Bereich der ersten Stirnseite auch wenigstens eine Öffnung vorgesehen sein, die mit dem Ausgangsbehälter in Verbindung bringbar ist.

Der Auslasszylinder der Verbindungsbaugruppe ist ein Hohlzylinder, der mit dem Ausgangsbehälter derart verbunden ist, dass das Medium des Ausgangsbehälters durch die erste offene Stirnseite in den Auslasszylinder einfließen kann. In der Schließstellung des Steuerzylinders ist der Auslasszylinder ansonsten nach außen abgeschlossen, so dass das Medium nicht entweichen kann. Die an der Mantelfläche befindliche mindestens eine Auslassöffnung ist mittels des ebenfalls als Hohlzylinder ausgebildeten Steuerzylinders verschlossen. Der Auslasszylinder und der Steuerzylinder sind zu diesem Zweck derart ausgebildet, dass der Steuerzylinder zumindest im Bereich der Auslassöffnung mit einer Innenfläche an einer Außenfläche des Auslasszylinders anliegt und/oder die Auslassöffnung mittels zusätzlicher Dichtmittel wie Dichtlippen nach außen abschließt. Vorzugsweise weisen der Auslasszylinder und der Steuerzylinder jeweils einen kreisförmigen Querschnitt auf. Es können jedoch auch andere, beispielsweise mehreckige Querschnitte zweckmäßig sein. Der Steuerzylinder muss den Auslasszylinder nicht vollständig umgeben, sondern kann beispielsweise auch längs geschlitzt sein.

Entlang einer Hauptachse können der Steuerzylinder und der Auslasszylinder derart gegeneinander verschoben werden, dass die Auslassöffnung des Auslasszylinders nach Verbinden der Verbindungsbaugruppe mit dem Zielbehälter geöffnet werden kann und das Medium in dieser Öffnungsstellung durch den Auslasszylinder hindurch vom Ausgangsbehälter in den Zielbehälter fließen kann. Nach Abschluss der Befüllung werden der Steuerzylinder und der Auslasszylinder wiederum gegeneinander verschoben, so dass die Auslassöffnung wieder durch den Steuerzylinder verschlossen ist. Anschließend ist der Ausgangsbehälter vom Zielbehälter trennbar, ohne dass es zum Verlust von im Ausgangsbehälter oder im Auslasszylinder verbliebenem Medium kommt.

Die mindestens eine Auslassöffnung kann bezüglich ihrer Maße an das spezifische Medium und die gewünschte Befüllungsgeschwindigkeit angepasst sein. Die Befüllungsgeschwindigkeit ist darüber hinaus auch über das Maß der Verschiebung des Steuerzylinders relativ zum Auslasszylinder steuerbar.

Die Verbindungsbaugruppe kann sowohl einstückig mit dem Ausgangsbehälter verbunden sein als auch separat und zur dauerhaften oder zeitweisen Befestigung am Ausgangsbehälter vorgesehen sein. Bei einer separaten Verbindungsbaugruppe ist die Befestigung am Ausgangsbehälter mittels eines Steck-, Schraub- oder Bajonettverschlusses zweckmäßig. Daneben ist auch eine Aufprellverbindung möglich. Zum Verbinden der Verbindungsbaugruppe mit dem Zielbehälter sind insbesondere Steck-, Schraub- oder Bajonettverschlüsse zweckmäßig. Sowohl auf der Seite des Ausgangsbehälters als auch auf der Seite des Zielbehälters kann es zweckmäßig sein, Dichtungen vorzusehen, um ein ungewolltes Austreten des Mediums wirksam zu verhindern.

In einer Weiterbildung der Erfindung ist der Steuerzylinder in der Betriebsstellung ortsfest relativ zu einem Ansatzstück des Zielbehälters angeordnet.

Bei dieser Weiterbildung wird in der Betriebsstellung der Auslasszylinder relativ zum Zielbehälter und dem Steuerzylinder verschoben, wobei der Steuerzylinder ortsfest zum Zielbehälter verbleibt. Dadurch sind besonders einfache Gestaltungen realisierbar, da es dabei nicht erforderlich ist, dass der innen liegende Auslasszylinder jenseits des außen liegenden Steuerzylinders auf dem Ansatzstück des Zielbehälters aufliegt und somit durch den Steuerzylinder hindurch oder um diesen herum am Zielbehälter angreifen muss. Auch müssen dann lediglich der Auslasszylinder und der Steuerzylinder gegeneinander abgedichtet werden.

In einer Weiterbildung der Erfindung ist die mindestens eine Auslassöffnung derart angeordnet, dass sie sich in der Betriebsstellung der Verbindungsbaugruppe und der Öffnungsstellung des Steuerzylinders und des Auslasszylinders zueinander innerhalb des Zielbehälters befindet.

Hierdurch kommt es nicht zum ungewollten Vergießen von Medium beim Trennen der Verbindungsbaugruppe vom Zielbehälter. Nach Verschieben des Auslasszylinders relativ zum Steuerzylinder in die Schließstellung kann der Ausgangsbehälter gemeinsam mit der Verbindungsbaugruppe vom Zielbehälter entfernt werden, wobei kein in den Zielbehälter nicht mehr passender Teil des Mediums aus dem Ausgangsbehälter entweichen kann und gegebenenfalls gleichzeitig der Pegelstand im Zielbehälter durch Entfernen des Auslasszylinders absinkt.

In einer Weiterbildung sind der Steuerzylinder und der Auslasszylinder durch eine Federkraft, die in Richtung der Schließstellung wirkt, gegeneinander kraftbeaufschlagt.

Der Verbindungsbaugruppe kann bei einer solchen Ausführungsform durch beispielsweise manuelles Aufbringen einer der Federkraft entgegengesetzten Kraft in ihre Öffnungsstellung überführt werden. Sobald diese Kraft entfällt, kehrt die Verbindungsbaugruppe durch die Federkraftvorspannung in die Schließstellung zurück. Dadurch wird die Gefahr verringert, dass die Verbindungsbaugruppe versehentlich in der Öffnungsstellung vom Zielbehälter entfernt wird. Darüber hinaus ist auch eine dosierte Befüllung des Zielbehälters vereinfacht möglich, wenn der Auslasszylinder und der Steuerzylinder nicht manuell zurück in die Schließstellung gezogen werden müssen, um den Medienfluss zu beenden.

Die Verbindungsbaugruppe weist mindestens eine Sperrklinke auf, mittels derer die Verschiebbarkeit des Steuerzylinders relativ zum Auslasszylinder in einer Blockierstellung der Sperrklinke blockierbar ist.

In der Blockierstellung ist ein Verschieben des Auslasszylinders und der Steuerzylinders zueinander nicht oder nur insoweit möglich, soweit kein Medium aus dem Auslasszylinder durch die Auslassöffnung austreten kann. Dadurch ist gewährleistet, dass es nicht zu einem versehentlichen Öffnen der Auslassöffnung kommt. Die Sperrklinke schafft dazu eine vorzugsweise formschlüssige Verbindung zwischen dem Auslasszylinder und dem Steuerzylinder. Sie wird mittelbar dadurch betätigt dass die Verbindungsbaugruppe in eine Betriebstellung gebracht wird.

Dazu ist die mindestens eine Sperrklinke derart ausgebildet, dass sie durch Aufsetzen der Verbindungsbaugruppe auf ein Ansatzstück des Zielbehälters aus der Blockierstellung in eine Freigabestellung bewegt wird.

Durch die Verbindung der Verbindungs-baugruppe mit dem Ansatzstück des Zielbehälters wird eine Betätigung der Sperrklinke ausgelöst. Diese wird erst dadurch in die Freigabestellung gebracht, in der der Auslasszylinder und der Steuerzylinder relativ zueinander in die Öffnungsstellung verschoben werden können. Die Öffnungsstellung kann daher nicht versehentlich hergestellt werden, bevor die Betriebsstellung der Verbindungsbaugruppe auf dem Ansatzstück des Zielbehälters erreicht ist. Die Bewegung der Sperrklinke in die Freigabestellung kann sowohl durch unmittelbare oder mittelbare Einwirkung des Ansatzstücks erzielt werden, als auch durch eine manuelle Relativbewegung von Komponenten der Verbindungsbaugruppe zueinander, beispielsweise durch ein Verdrehen des Bajonettrings eines Bajonettverschlusses der Verbindungsbaugruppe.

In einer Weiterbildung der Erfindung ist die mindestens eine Sperrklinke zwischen dem Steuerzylinder und einer Außenhülse vorgesehen, wobei die Außenhülse zur Befestigung am Ansatzstück des Zielbehälters relativ zum Steuerzylinder derart verschiebbar ist, dass die Sperrklinke aus einer Blockierstellung in eine Freigabestellung gekippt wird.

Bei einer solchen Ausführungsform sind der Steuerzylinder und die Außenhülse in einer Aufsetzrichtung gegeneinander verschiebbar. Beim Aufsetzen der Verbindungsbaugruppe auf dem Ansatzstück des Zielbehälters, insbesondere beim Aufschrauben der Verbindungsbaugruppe, werden die beiden Bauteile gegeneinander verschoben, sobald eines der Bauteile, vorzugsweise der Steuerzylinder, an einem ansatzstückseitigen Absatz anliegt. Die dann im Zuge des Weiterbewegens der Außenhülse auftretende Relativverschiebung zwischen Steuerhülse und Außenhülse führt zu einem Verkippen der mindestens einen zwischen Steuerhülse und Außenhülse angeordneten Sperrklinke, welche dadurch aus einem vorherigen blockierenden Kippzustand in einen freigebenden Kippzustand verschwenkt wird und somit eine Relativbewegung zwischen Auslasszylinder und Steuerzylinder gestattet. Eine solche Ausgestaltung ist einfach zu realisieren und bietet ein hohes Maß an Sicherheit, da ein versehentliches Verschieben des Steuerzylinders und der Außenhülse nicht zu befürchten ist. Besonders vorteilhaft sind Ausgestaltungen, bei denen der Steuerzylinder im nicht aufgesetzten Zustand der Verbindungsbaugruppe schlecht manuell zugänglich ist oder bei denen eine zusätzliche Feder zwischen der Außenhülse und dem Steuerzylinder vorgesehen ist, die einer ungewollten Relativverschiebung entgegenwirkt. Die Sperrklinke kann beispielsweise T-förmig ausgebildet sein, wobei eine Kippbewegung dann durch Verschiebung einer der außen liegenden Enden der T-Form erfolgen kann.

In einer Weiterbildung der Erfindung ist die mindestens eine Sperrklinke L-förmig ausgebildet und weist einen Blockierschenkel und einen Betätigungsschenkel auf, wobei ein proximales Ende des Betätigungsschenkels auf einer Schwenkstufe des Steuerzylinders aufliegt und ein distales Ende des Betätigungsschenkels in der Freigabestellung an einer Betätigungsstufe der Außenhülse anliegt.

Eine derartige Sperrklinke stellt eine besonders einfache Ausgestaltung dar. In der Blockierstellung erstreckt sich der Blockierschenkel vorzugsweise in der Verschieberichtung von Auslasszylinder und Steuerzylinder zueinander. Der Blockierschenkel liegt dabei mit seinem distalen Ende an einer Absatzfläche des Auslasszylinders und mit seinem proximalen Ende an der Schwenkstufe des Steuerzylinders an. Er verhindert so, dass eine Relativverschiebung zwischen Auslasszylinder und Steuerzylinder und damit ein Erreichen der Öffnungsstellung möglich ist. Wenn die Außenhülse gegen den Steuerzylinder verschoben wird, erfasst sie mit der Betätigungsstufe das distale Ende des Betätigungsschenkels, so dass dieser im Zuge weiterer Verschiebung der Außenhülse um die Schwenkstufe des Steuerzylinders gekippt wird, so dass damit auch der integral mit dem Betätigungsschenkel verbundene Blockierschenkel im Bereich der Absatzfläche des Auslasszylinders nach außen geschwenkt wird. Damit wird die Freigabestellung erreicht, in der der Auslasszylinder gegen den Steuerzylinder verschoben werden kann.

In einer Weiterbildung der Erfindung ist die mindestens eine Sperrklinke mit einer Federkraft in Richtung der Blockierstellung beaufschlagt.

Die Sperrklinke gelangt dadurch automatisch wieder in die Blockierstellung zurück, beispielsweise nach Entfernen der Verbindungsbaugruppe vom Ansatzstück des Zielbehälters. Ein manuelles Bewegen der Sperrklinke in ihre Blockierstellung kann dadurch entfallen.

In einer Weiterbildung der Erfindung weist die Verbindungsbaugruppe mindestens zwei am äußeren Umfang des Steuerzylinders angeordnete Sperrklinken auf, die miteinander durch in Umfangsrichtung ausgerichtete elastische Zwischenelemente miteinander verbunden sind.

Besonders vorteilhaft sind dabei Ausgestaltungen mit vier oder mehr vorzugsweise gleichmäßig auf dem Umfang des Steuerzylinders angeordneten Sperrklinken. Die mehreren Sperrklinken blockieren die Relativbewegung des Auslasszylinders und des Steuerzylinders dadurch besonders sicher und gleichmäßig. Durch die elastischen Zwischenelemente werden die Sperrklinken jederzeit mit einer Federkraft in Richtung der Blockierstellung gedrückt, ohne dass eine konstruktiv aufwändigere Konstruktion mit separaten Federelementen zwischen den einzelnen Sperrklinken und dem Steuerzylinder bzw. der Außenhülse erforderlich ist. Die elastischen Zwischenelemente können beispielsweise durch elastisch dehnbare Bänder oder auch Schraubenfedern gebildet werden.

In einer Weiterbildung der Erfindung sind die Sperrklinken gemeinsam einstückig aus Kunststoff und die Zwischenelemente als elastische Kunststoffstege ausgebildet.

Dies stellt eine besonders kostengünstige und in der Montage einfach zu handhabende Gestaltung dar. Das einstückige Kunststoffteil besteht dabei aus mehreren Sperrklinken, die durch einstückig angeformte Kunststoffstege miteinander zu einem Gesamtring aus Sperrklinken und Verbindungsstegen verbunden sind. Die Kunststoffstege sind bezüglich ihres Querschnitts und ihrer Materialeigenschaften so ausgelegt, dass der Gesamtring soweit elastisch dehnbar ist, dass alle Sperrklinken gleichzeitig aus ihrer jeweiligen Blockierstellung in ihre Freigabestellung nach außen gedrückt werden können.

In Weiterbildung der Erfindung sind wenigstens zwei Sperrklinken an einem ringförmigen Sperrkranz vorgesehen, wobei der Sperrkranz eine Ringscheibe und senkrecht zur Ringscheibe angeordnete Sperrklinkenvorsprünge aufweist.

Auf diese Weise lassen sich mittels eines einzigen Bauteils mehrere Sperrklinken in der Verbindungsbaugruppe anordnen. Die Sperrklinken sind dabei beispielsweise als gerade, leistenartige und sich ausgehend vom Innenumfang der Ringscheibe senkrecht nach oben erstreckende Vorsprünge ausgebildet. Eine Betätigung der Sperrklinken erfolgt in diesem Fall dadurch, dass der äußere Umfang der Ringscheibe ausgelenkt wird. Der Innenumfang der Ringscheibe wird dahingegen festgehalten, so dass sich in Verbindung mit einer elastischen Verformung der Ringscheibe dann die von der Ringscheibe entfernt liegenden Enden der Sperrklinken bewegen, beispielsweise nach außen, um die Verbindungsbaugruppe zu entsperren.

In Weiterbildung der Erfindung sind die Ringscheibe und die Sperrklinkenvorsprünge einstückig aus elastischem Material, insbesondere Kunststoff, ausgebildet.

Die einstückige Ausbildung von Ringscheibe und Sperrklinkenvorsprüngen ermöglicht es, den ringförmigen Sperrkranz in hohen Stückzahlen preisgünstig als Kunststoffspritzgussteil zu fertigen. Die wenigstens abschnittsweise elastische Ringscheibe übernimmt dabei die Verbindung der einzelnen Sperrklinkenvorsprünge untereinander und ermöglicht es durch ihre elastische Verformbarkeit auch, die Sperrklinkenvorsprünge auszulenken. Gleichzeitig können durch Verwendung einer elastischen Ringscheibe die Sperrklinkenvorsprünge auch in eine Position, beispielsweise die Sperrposition, vorgespannt werden.

Weitere Merkmale der Erfindung ergeben sich aus den Ansprüchen und der Beschreibung im Zusammenhang mit den Zeichnungen. Nachfolgend sind drei bevorzugte Ausführungsformen der Erfindung dargestellt und beschrieben. Einzelmerkmale der unterschiedlichen Ausführungsformen lassen sich in beliebiger Weise kombinieren ohne den Rahmen der Erfindung zu verlassen. Dabei zeigen:
- Fig. 1a - 1c: eine nicht zur Erfindung gehörende Ver- bindungsbaugruppe in drei Stadien eines Befüllungsvor- gangs,
- Fig. 2a - 2c: eine erste Ausführungsform einer erfindungsgemäßen Verbindungsbaugruppe mit Sperrklinken in drei Stadien ei- nes Befüllungsvorgangs,
- Fig. 3a - 3c: eine zweite Ausführungsform einer erfindungsgemäßen Ver- bindungsbaugruppe mit Sperrklinken in drei Stadien eines Befüllungsvorgangs,
- Fig. 4: eine abschnittsweise schematische Darstellung von Sperr- klinken der zweiten Ausführungsform,
- Fig. 5: eine Draufsicht auf einen Sperrkranz, wie er in einer Verbin- dungsbaugruppe gemäß den Figuren 3a bis 3c eingesetzt werden kann,
- Fig. 6: eine Seitenansicht des Sperrkranzes der Fig. 5.
- Fig. 7: eine Schnittansicht entlang der Linie VII-VII der Fig. 5,
- Fig. 8: eine Schnittansicht entlang der Linie VIII-VIII der Fig. 5,
- Fig. 9a - 9c: eine dritte Ausführungsform einer erfindungsgemäßen Ver- bindungsbaugruppe mit Sperrklinken in drei Stadien eines Befüllungsvorgangs,
- Fig. 10: eine Draufsicht auf einen in seiner Mittenebene halbierten Auslasszylinder der Verbindungsbaugruppe der Fig. 9a,
- Fig. 11: eine Ansicht der Schnittebene XI-XI der Fig. 10, wobei eine Dichtung des Auslasszylinders im abgenommenen Zustand dargestellt ist,
- Fig. 12: eine Ansicht einer Außenhülse der Verbindungsbaugruppe der Fig. 9a im entlang einer Mittenebene aufgeschnittenen Zustand,
- Fig. 13: eine Draufsicht auf die in der Mitte aufgeschnittene Außen- hülse der Fig. 12,
- Fig. 14: eine Schnittansicht eines Steuerzylinders der Verbindungs- baugruppe der Fig. 9a mit einstückig angeformten Sperrklin- ken,
- Fig. 15: eine Schnittansicht einer vierten Ausführungsform einer er- findungsgemäßen Verbindungsbaugruppe mit Entlüftungs- schlauch,
- Fig. 16: eine Seitenansicht eines Ausgangsbe- hälters und
- Fig. 17a-17c: eine Schnittansicht einer fünften Ausführungsform einer erfindungsgemäßen Verbindungsbaugruppe.

Im Zusammenhang mit der Beschreibung der Zeichnungen sind mit "oben" Bewegungen und Ausrichtungen in Richtung 90a, 190a, 290a, 700a und mit "unten" Bewegungen und Ausrichtungen in Richtung 90b, 190b, 290b, 700b bezeichnet.

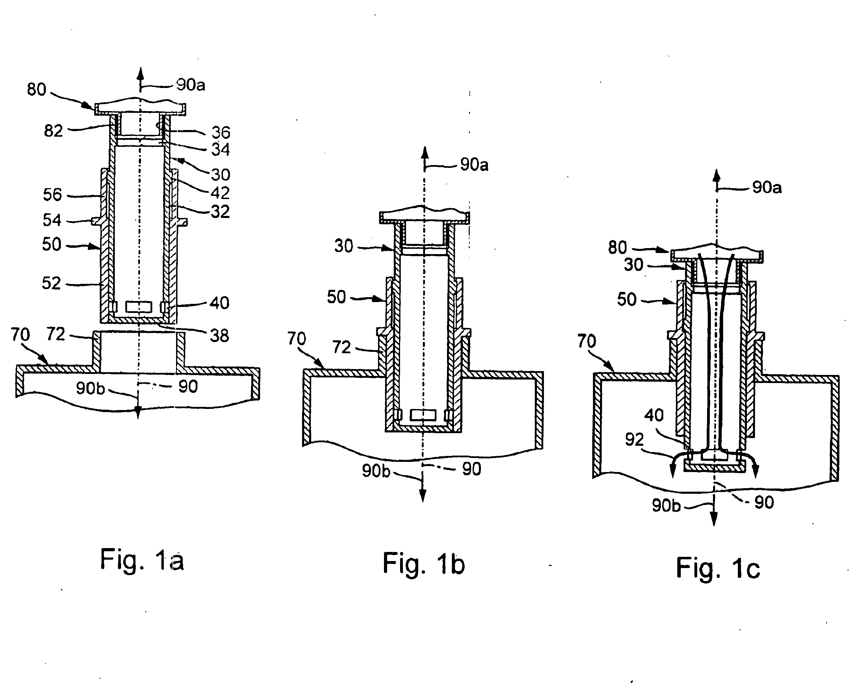

Die Figuren 1a bis 1c zeigen eine Verbindungsbaugruppe sowie einen Medienausgangsbehälter 80 und einen. Medienzielbehälter 70. Die Verbindungsbaugruppe weist einen Auslasszylinder 30 auf, auf den ein Steuerzylinder 50 von unten aufgeschoben ist.

Der Auslasszylinder 30 ist als Hohlzylinder mit kreisförmigem Querschnitt ausgebildet und weist einen rohrförmigen Mantelabschnitt 32 auf. Eine obere Stirnseite 34 ist offen ausgebildet und weist ein Innengewinde 36 auf, mittels dem der Auslasszylinder 30 mit dem Medienausgangsbehälter 80 verbindbar ist, der ein zum Innengewinde 36 passendes Außengewinde 82 aufweist. Die untere Stirnseite 38 des Auslasszylinders 30 ist geschlossen. Im Mantelabschnitt 32 sind am unteren Ende insgesamt vier Ausgangsöffnungen 40 vorgesehen, die den Mantelabschnitt 32 durchbrechen.

Der Steuerzylinder 50 ist ebenfalls als Hohlzylinder mit kreisförmigem Querschnitt ausgebildet. Der Innendurchmesser des Steuerzylinders 50 entspricht in einem unteren Schließabschnitt 52 in etwa dem Außendurchmesser des Mantelabschnitts 32 des Auslasszylinders 30, wobei eine enge Spielpassung Anwendung findet, so dass der Auslasszylinder 30 und der Steuerzylinder 50 relativ zueinander in Richtung ihrer jeweiligen Hauptachse 90 gegeneinander verschiebbar sind. Oberhalb des Schließabschnitts 52 ist ein außenseitig umlaufender Kragenabschnitt 54 zur Auflage auf einem Ansatzstück 72 des Zielbehälters 70 vorgesehen. An den Kragenabschnitt 54 schließen sich oberhalb insgesamt sechs Rastnasen 56 an, die über einen umlaufenden Sicherungssteg 42 des Auslasszylinders 30 gerastet sind. Mittels des Sicherungsstegs 42 und der Rastnasen 56 sind der Auslasszylinder 30 und der Steuerzylinder 50 lösbar und relativverschiebbar miteinander verbunden.

Fig. 1a zeigt die Verbindungsbaugruppe vor Erreichen einer Betriebsstellung. Die Verbindungsbaugruppe, bestehend aus dem Auslasszylinder 30 und dem Steuerzylinder 50, ist mit dem Ausgangsbehälter 80 verbunden. Der Steuerzylinder 50 ist gegenüber dem Auslasszylinder 30 in einer Schließstellung, in der der Schließabschnitt 52 über die Auslassöffnungen 40 hinüberragt und diese dadurch verschließt.

Fig. 1b zeigt die Verbindungsbaugruppe in der Betriebsstellung. In dieser Betriebsstellung ist sie mitsamt dem Ausgangsbehälter auf das Ansatzstück 72 des Zielbehälters 70 aufgesteckt. Der Steuerzylinder 50 ist gegenüber dem Auslasszylinder 30 unverändert in der Schließstellung.

Ausgehend von dieser Schließstellung wird der Ausgangsbehälter 80 gemeinsam mit dem Auslasszylinder 30 der Verbindungsbaugruppe nach unten verschoben, bis die in Fig. 1c dargestellte Öffnungsstellung erreicht ist. In dieser Öffnungsstellung befinden sich die Auslassöffnungen 40 unterhalb des unteren Randes des Steuerzylinders 50 und liegen dadurch frei. Das im Ausgangsbehälter 80 befindliche Medium kann daher entlang der Fließpfade 92 durch den Auslasszylinder 30 hindurch in den Zielbehälter 70 fließen.

Besonders vorteilhaft ist es, wenn die durch den Reibwiderstand verursachte Gegenkraft beim Abziehen der Verbindungsbaugruppe vom Zielbehälter 70 an der Kontaktfläche zwischen dem Steuerzylinder 50 und der Ansatzstück 72 größer ist als zwischen dem Steuerzylinder 50 und dem Auslasszylinder 30. Hierdurch wird erreicht, dass eine auf den Ausgangsbehälter 80 nach oben wirkende Abziehkraft zuerst dazu führt, dass der Auslasszylinder 30 und der Steuerzylinder 50 wieder in die Schließstellung übergehen, bevor der Steuerzylinder 50 sich vom Ansatzstück 72 löst. Ein gezieltes Überführen der Verbindungsbaugruppe in die Schließstellung kann dadurch entfallen.

Die beschriebene Verbindungsbaugruppe ermöglicht die Befüllung des Zielbehälters 70, ohne dass Medium verloren gehen kann. Selbst wenn der Ausgangsbehälter 80 nach Abschluss des Befüllungsvorgangs nicht leer ist, kann durch das Verschließen der Verbindungsbaugruppe vor dem Abnehmen des Ausgangsbehälters 80 und der Verbindungsbaugruppe vom Zielbehälter 70 verhindert werden, dass Medium entweicht.

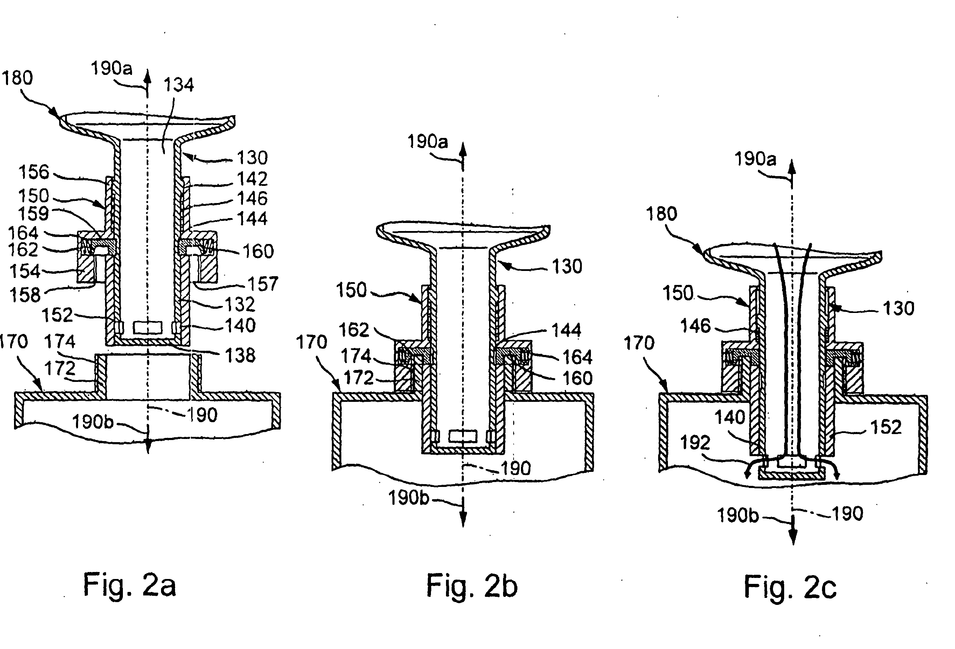

Die Fig. 2a bis 2c zeigen eine erste Ausführungsform einer erfindungsgemäßen Verbindungsbaugruppe. Wie die erste Ausführungsform, die in den Fig. 1a bis 1c dargestellt ist, weist auch diese zweite Ausführungsform einen Auslasszylinder 130 auf, der einen rohrförmigen Mantelabschnitt 132 mit vier durchbrechenden Auslassöffnungen 140 am unteren Ende, eine obere offene Stirnseite 134 und eine untere geschlossene Stirnseite 138 aufweist. An der Außenseite des Mantelabschnitts 132 sind ein umlaufender Sicherungssteg 142 und eine umlaufende Blockiernut 144 vorgesehen. Abweichend vom ersten Ausführungsbeispiel der Fig. 1a bis 1c ist der Auslasszylinder 130 mit einem Ausgangsbehälter 180 einstückig verbunden.

Auf den Auslasszylinder 130 ist ein Steuerzylinder 150 von unten aufgeschoben. Dieser Steuerzylinder 150 weist einen rohrförmigen Schließabschnitt 152 auf, dessen Innendurchmesser mit dem Außendurchmesser des Mantelabschnitts 132 eine enge Spielpassung bildet. Oberhalb des Schließabschnitts 152 weist der Steuerzylinder 150 sechs Rastnasen 156 auf, mittels derer der Steuerzylinder 150 am umlaufenden Sicherungssteg 142 des Auslasszylinders 130 lösbar und verschiebbar befestigt ist. Am oberen Ende des Schließabschnitts 152 weist der Steuerzylinder 150 einen Btockierabschnitt 154 mit größerem Durchmesser auf, in dem eine nach unten offene ringförmige Aufnahmenut 157 mit einem Innengwinde 158 ausgebildet ist, welche zur Befestigung der Verbindungsbaugruppe an einem Ansatzstück 172 eines Zielbehälters 170 dient. Am Nutengrund kreuzen insgesamt vier sich in radiale Richtung von der Innenseite des Steuerzylinders erstreckende Ausnehmungen 159 zur Aufnahme von Sperrstiften 160 die Aufnahmenut 157.

In den Ausnehmungen 159 ist jeweils ein Sperrstift 160 eingeschoben, der an seiner Unterseite eine Aussparung mit einer angewinkelten Keilfläche 162 aufweist. Die Sperrstifte 160 sind in radialer Richtung in den Aufnahmen 159 verschiebbar, wobei jeweils eine Sperrstiftfeder 164 am äußeren Ende der Aufnahmen 159 eingelegt ist, die den Sperrstift 160 mit einer radial nach innen wirkenden Federkraft beaufschlagt.

Zwischen den Auslasszylinder 130 und den Steuerzylinder 150 ist eine Schraubenfeder 164 eingelegt, mittels derer der Auslasszylinder 130 gegenüber dem Steuerzylinder 150 mit einer nach oben in Richtung der Schließstellung gerichteten Federkraft beaufschlagt und somit in die Schließstellung vorgespannt ist.

Fig. 2a zeigt die einstückig mit dem Ausgangsbehälter 180 verbundene Verbindungsbaugruppe vor Erreichen der Betriebsstellung auf dem Ansatzstück 172 des Zielbehälters 170. In diesem Zustand sind der Steuerzylinder 150 und der Auslasszylinder 130 relativ zueinander in einer Schließstellung, in welcher der Schließabschnitt 152 des Steuerzylinders 150 über den Auslassöffnungen 140 des Auslasszylinders 130 liegt, so dass ein Entweichen des Mediums aus dem Ausgangsbehälter 130 verhindert wird. Ein Verschieben der Auslasszylinders 130 und des Steuerzylinders 150 ist vor Erreichen der Betriebsstellung der Fig. 2b nicht möglich, da die Sperrstifte 160 in dieser Blockierstellung in die Blockiernut 144 des Auslasszylinders 130 ragen.

Ausgehend von dem Zustand der Fig. 2a wird die Verbindungsbaugruppe gemeinsam mit dem Ausgangsbehälter 130 mittels des Innengewindes 158 und eines Außengewindes 174 am Ansatzstück 172 auf den Zielbehälter 170 aufgeschraubt. Beim Aufschrauben drückt ein oberer Rand des Ansatzstücks 172 gegen die Keilflächen 162 der Sperrstifte 160 und drückt diese dadurch gegen die Federkraft der Sperrstiftfedern 164 nach außen. Die Sperrstifte 160 gelangen dadurch in die in Fig. 2b dargestellte Freigabestellung, in der sie aus der Blockiernut 144 des Auslasszylinders 130 ausgerückt sind.

In dieser Betriebsstellung der Verbindungsbaugruppe kann der Auslasszylinder 130 aus der Schließstellung der Fig. 2a und 2b ist die Öffnungsstellung der Fig. 2c gedrückt werden. Zu diesem Zweck wird der Auslasszylinder 130 gemeinsam mit dem Ausgangsbehälter 180 gegen die Federkraft der Schraubenfeder 146 nach unten gedrückt, so dass die Auslassöffnungen 140 aus dem Bereich des Schließabschnitts 152 des Steuerzylinders 150 herausgeschoben werden. Wenn der Zustand der Fig. 2b erreicht ist, kann das im Ausgangsbehälter 180 befindliche Medium durch den Auslasszylinder 130 hindurch entlang des Fließpfades 192 in den Zielbehälter 170 fließen.

Sobald der Auslasszylinders 130 und der Ausgangsbehälter 180 nicht mehr nach unten gedrückt werden, verlagern sie sich Aufgrund der Federkraft der Schraubenfeder 146 wieder nach oben, so dass der Auslasszylinder relativ zum Steuerzylinder 150 wieder in die Schließstellung gelangt und der Fluss des Mediums unterbrochen wird. Sobald der Steuerzylinder 150 wieder vom Ansatzstück 172 des Zielbehälters 170 abgeschraubt wird, werden die Sperrstifte 160 von den Sperrstiftfedern 164 wieder in die Blockiernut 144 eingerückt, so dass ein Verlassen dieser Schließstellung außerhalb der Betriebsstellung der Verbindungsbaugruppe nicht möglich ist.

Diese erste Ausführungsform der Fig. 2a bis 2c ist aufgrund der Sperrstifte besonders sicher, da diese erst in der Betriebsstellung einen Übergang in die Öffnungsstellung und damit ein Entweichen des Mediums gestatten.

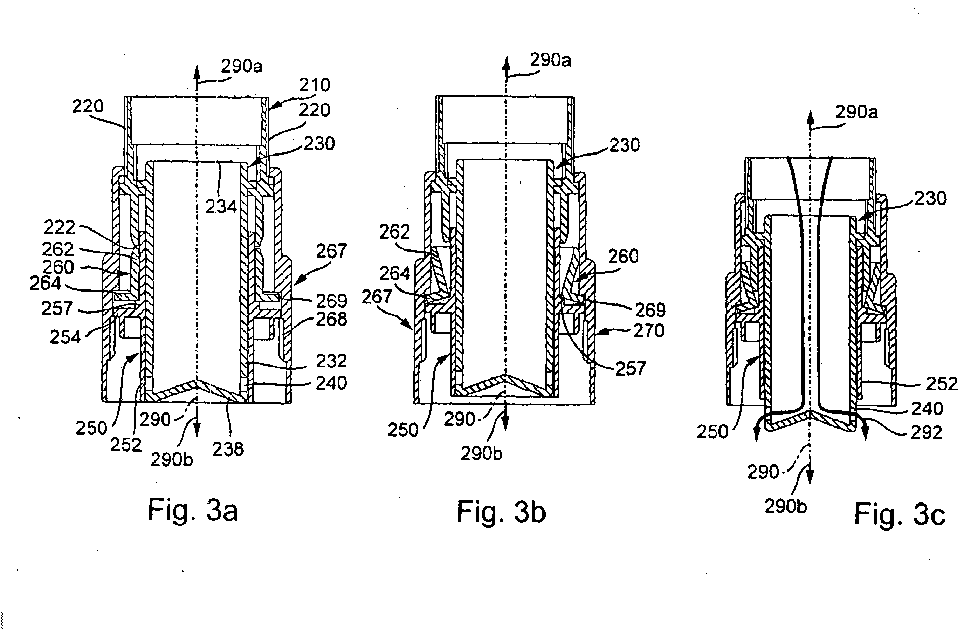

Die Fig. 3a bis 3c zeigen eine zweite Ausführungsform einer erfindungsgemäßen Verbindungsbaugruppe.

Bei dieser zweiten Ausführungsform weist die Verbindungsbaugruppe ein Auslassbauteil 210 auf, das aus einem Aufsatzabschnitt 220 zur Befestigung an einem Ausgangsbehälter sowie einem damit fest verbundenem Auslasszylinder 230 besteht. Darüber hinaus weist die Verbindungsbaugruppe einen Steuerzylinder 250, sieben miteinander verbundene Sperrklinken 260 sowie eine Außenhülse 267 auf.

Der Auslasszylinder 230 verfügt über einen rohrförmigen Mantelabschnitt 232, der am unteren Ende von zwei Auslassöffnungen 240 durchbrochen ist. Eine obere Stirnseite 234 des Auslasszylinders 230 ist offen und erlaubt freien Medienzufluss in den Auslasszylinder 230, wenn dieser mit dem Ausgangsbehälter verbunden ist. Die gegenüberliegende untere Stirnseite 238 ist geschlossen.

Der Steuerzylinder 250 ist von unten auf den Auslasszylinder 230 aufgeschoben und weist einen unteren Schließabschnitt 252 auf, dessen Innendurchmesser mit dem Außendurchmesser des Auslasszylinders 230 eine enge Spielpassung bildet und der in einer Schließstellung der Fig. 3a und 3b die Auslassöffnungen 240 abdeckt. Oberhalb des Schließabschnitts 252 weist der Steuerzylinder einen umlaufenden Kragenabschnitt 254 auf, der in einer Betriebstellung auf einem Ansatzstück eines Zielbehälters aufliegt. Auf der Oberseite des Kragenabschnitts ist eine umlaufende Schwenkstufe 257 vorgesehen.

Auf das Auslassbauteil 210 und den Steuerzylinder 250 ist von oben eine Außenhülse 267 aufgeschoben, die ein Innengewinde 268 zur Verbindung der Verbindungsbaugruppe mit dem Zielbehälter aufweist. An der Innenseite der Außenhülse ist eine umlaufende Betätigungsstufe 269 vorgesehen.

Zwischen der Außenhülse 267 und dem Steuerzylinder 250 sind die sieben Sperrklinken 260 ringförmig und gleichmäßig voneinander beabstandet angeordnet. Die Sperrklinken weisen jeweils einen L-förmigen Querschnitt mit einem sich in etwa in axialer Richtung 290 erstreckendem Blockierabschnitt 262 und einem sich etwa radial erstreckenden Betätigungsabschnitt 264 auf. In nicht dargestellter Art und Weise sind die Sperrklinken 260 im Bereich des Blockierabschnitts 264 durch elastische Kunststoffstege ringförmig miteinander verbunden. Die Federkraft der elastischen Kunststoffstege drückt die Sperrklinken 260 stets in Richtung der in der Fig. 3a dargestellten Blockierstellung. Zwischen einem oberen Ende des Steuerzylinders 250 und dem oberhalb dieses oberen Endes nach innen erstreckenden Flansch des Aufsatzabschnitts 220 kann eine Schraubenfeder angeordnet sein, um eine Vorspannung in die dargestellte Blockierstellung zu erzeugen.

Fig. 3a zeigt einen Zustand der Verbindungsbaugruppe vor der Verbindung mit dem Zielbehälter. In diesem Zustand liegt der Schiiersabschnitt 252 des Steuerzylinders 250 über den Auslassöffnungen 240 des Auslasszylinders 230, so dass kein Medium aus dem nicht dargestellten Ausgangsbehälter, der mit dem Auslasszylinder 230 verbunden ist, entweichen kann. Ein manuelles Verschieben des Steuerzylinders 250 gegenüber dem Auslasszylinder 230 ist nicht möglich, da die Blockierabschnitte 262 der Sperrklinken 260 am Auslasszylinder 230 anliegen und eine Verschiebung des Steuerzylinders 250 dadurch unterbinden, dass sie mit ihrem proximalen Ende an der Schwenkstufe 257 des Steuerzylinders 250 und mit ihrem distalen Ende an einem sich axial erstreckenden Sicherungskragen 222 des Auslassbauteils 210 anliegen und dadurch eine Verkürzung des Abstandes dieser Bauteile blockieren.

Ausgehend von diesem Zustand wird die Verbindungsbaugruppe mit dem Kragenabschnitt 254 des Steuerzylinders 250 auf ein nicht dargestelltes Ansatzstück eines Zielbehälters aufgesetzt, und die Außenhülse 267 wird mittels des Innengewindes 268 am Ansatzstück festgeschraubt. Wie in Fig. 3b dargestellt ist, kommt es hierdurch zu einer Relativverschiebung der Außenhülse 267 gegenüber dem Steuerzylinder 250 in Richtung 290b und damit auch zu einer Verschiebung der Betätigungsstufe 269 des Außenzylinders 267 gegenüber der Schwenkstufe 257 des Steuerzylinders 250. In Folge dessen werden die dazwischen liegenden Betätigungsabschnitte 264 der Sperrklinken 260 um eine tangentiale Achse gekippt, was aufgrund der einstückigen Ausführung auch ein sternförmiges Verkippen der Blockierabschnitte 262 nach außen entgegen der Federkraft der elastisch gespannten Kunststoffstege und von dem Sicherungskragen 222 weg zur Folge hat. Die in Fig. 3b dargestellte gekippte Stellung der Sperrklinken 260 stellt eine Freigabestellung dar, in der eine Verschiebung des Auslasszylinders 230 gegenüber dem Steuerzylinder 250 möglich ist.

Fig. 3c zeigt die Verbindungsbaugruppe in ihrer Öffnungsstellung, in der der Auslasszylinder 230 gegenüber dem Steuerzylinder 250 nach unten gedrückt ist, so dass die Auslassöffnungen 240 vom Schließabschnitt 252 des Steuerzylinders 250 nicht mehr abgedeckt sind. Das aus dem nicht dargestellten Ausgangsbehälter kommende Medium kann durch den Auslasszylinder 230 hindurch entlang des Fließpfades 292 in den ebenfalls nicht dargestellten Zielbehälter fließen.

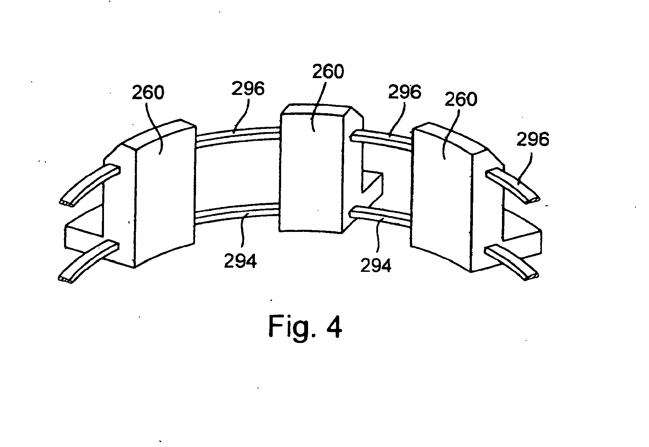

Diese zweite Ausführungsform ist insbesondere aufgrund der einfachen Bauweise von Vorteil. Die Sperrklinken 260 bilden zusammen mit den verbindenden Kunststoffstegen ein einzelnes ringförmige Bauteil, welches günstig in der Herstellung und einfach handhabbar bei der Montage ist. Eine abschnittsweise schematische Darstellung eines solchen ringförmigen Bauteils ist in Fig. 4 dargestellt. Die einzelnen Sperrklinken 260 sind mittels jeweils zwei Kunststoffstegen 294, 296 miteinander verbunden. Beim Verkippen der Sperrklinken 260 nach außen werden vor allem die oberen Kunststoffstege 296 auf Dehnung beansprucht, wohingegen die unteren Kunststoffstege 294 in der Nähe der jeweiligen Drehachse liegen und nicht oder weniger stark auf Dehnung beansprucht werden.

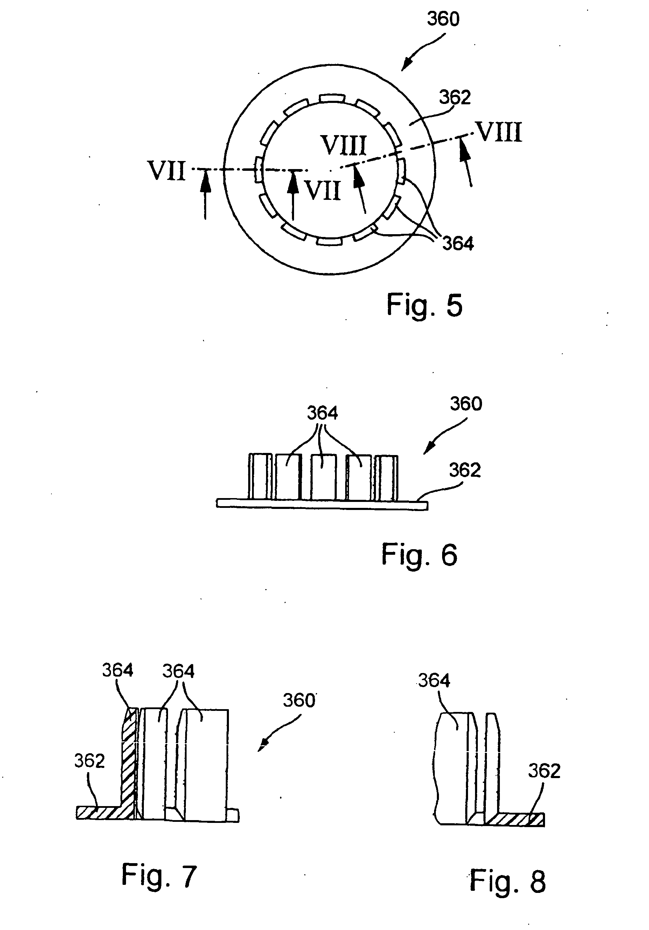

Die Draufsicht der Fig. 5 zeigt einen Sperrkranz 360, der anstelle der Sperrklinken 260 bei der Verbindungsbaugruppe der Figuren 3a bis 3c eingesetzt werden kann. Der Sperrkranz 360 weist eine Ringscheibe 362 und insgesamt zwölf auf der Ringscheibe 362 angeordnete Sperrklinkenvorsprünge 364 auf. Die Sperrklinkenvorsprünge 364 sind angrenzend an einen Innenumfang der Ringscheibe 362 angeordnet und entlang dieses Innenumfangs gleichmäßig voneinander beabstandet. Die Sperrklinkenvorsprünge 364 weisen jeweils einen rechteckförmigen Querschnitt auf und erstrecken sich ausgehend von der Ringscheibe 362 senkrecht zu dieser.

Wie bereits ausgeführt wurde, kann der Sperrkranz 360 anstelle der Sperrklinken 260 bei der Vorrichtung der Figuren 3a bis 3c eingesetzt werden. Der Innenumfang der Ringscheibe 362 ist demzufolge mittels eines Absatzes unterstützt und beim Aufschrauben der Verbindungsbaugruppe wird eine Kraft im Bereich des Außenumfanges der Ringscheibe 362, in der Fig. 6 nach unten, ausgeübt. Infolgedessen wird sich die Ringscheibe 362 elastisch verformen, der Innenumfang bleibt dabei im Wesentlichen an der gleichen Position, der Außenumfang wird in der Darstellung der Fig. 6 nach unten gedrückt. Da die Sperrklinkenvorsprünge 364 einstückig mit der Ringscheibe 362 ausgebildet sind, werden diese durch die Verformung der Ringscheibe 362 mit ihren in Fig. 6 oberen Enden, die nicht mit der Ringscheibe 362 verbunden sind, in radialer Richtung nach außen ausgelenkt. Dadurch kann die Verbindungsbaugruppe entsperrt werden.

Aufgrund der elastischen Verformung der Ringscheibe 362 bewegt sich diese beim Abnehmen der Verbindungsbaugruppe wieder in ihre Fig. 6 gezeigte Ausgangsstellung zurück und gleichzeitig bewegen sich auch die oberen Enden der Sperrklinken 364 wieder zurück in ihre Sperrstellung.

Die Schnittansicht der Fig. 7 entlang der Linie VII-VII der Fig. 5 zeigt einen Schnitt durch den Sperrkranz an der Stelle eines Sperrklinkenvorsprungs 364. Es ist zu erkennen, dass die Ringscheibe 362 und die Sperrklinkenvorsprünge 364 einstückig ausgebildet sind und beispielsweise als Kunststoffspritzgussteil ausgeführt sind. In den Zwischenräumen zwischen zwei Sperrklinkenvorsprüngen 364 ist der Innenumfang der Ringscheibe 362 angeschrägt. Eine den Sperrklinkenvorsprüngen 364 gegenüberliegende Unterseite der Ringscheibe 362 definiert dann den kleinsten Innenumfang des Sperrkranzes 360 und zur Oberseite der Ringscheibe 362 hin verläuft die Innenwand der Ringscheibe 362 zwischen zwei Sperrklinkenvorsprüngen 364 dann nach außen hin geneigt. Durch diese Maßnahmen kann die Beweglichkeit der Sperrkiinkenvorsprünge 364 erhöht werden und es ergeben sich Vorteile bei der Entformung des Sperrkranzes 360.

Die Schnittansicht der Fig. 8 zeigt eine Schnittansicht entlang der Linie VIII-VIII der Fig. 5 und die angeschrägte Ausführung des Innenumfangs der Ringscheibe 362 ist hier gut zu erkennen.

Insgesamt wird mittels des einstückigen Sperrkranzes 360 ein auch in sehr hohen Stückzahlen kostengünstig herstellbares und dabei äußerst zuverlässiges Sperrklinkenbauteil geschaffen, das auch zahlreichen Arbeitszyklen ohne weiteres standhält.

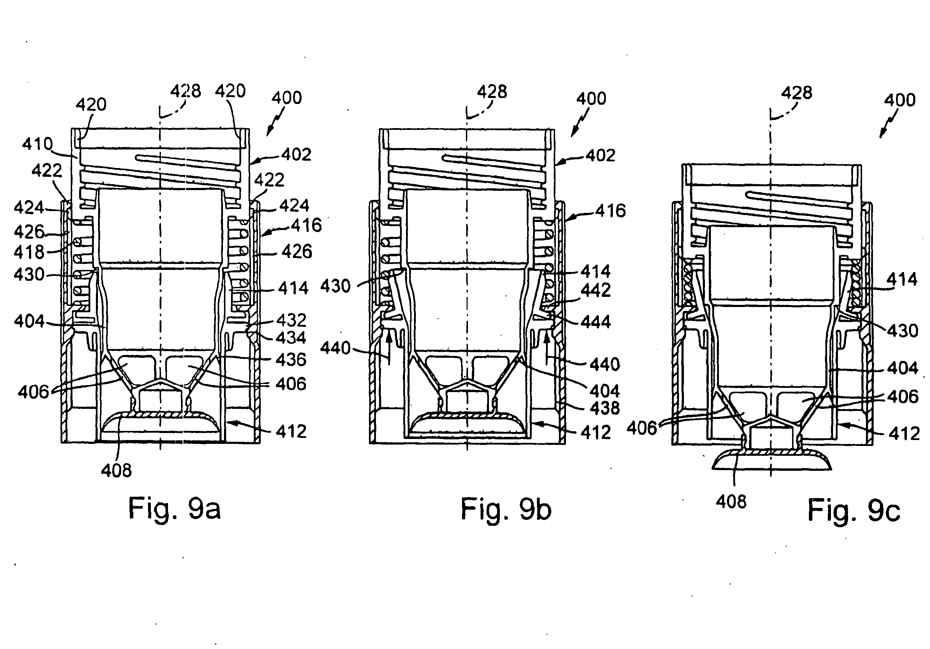

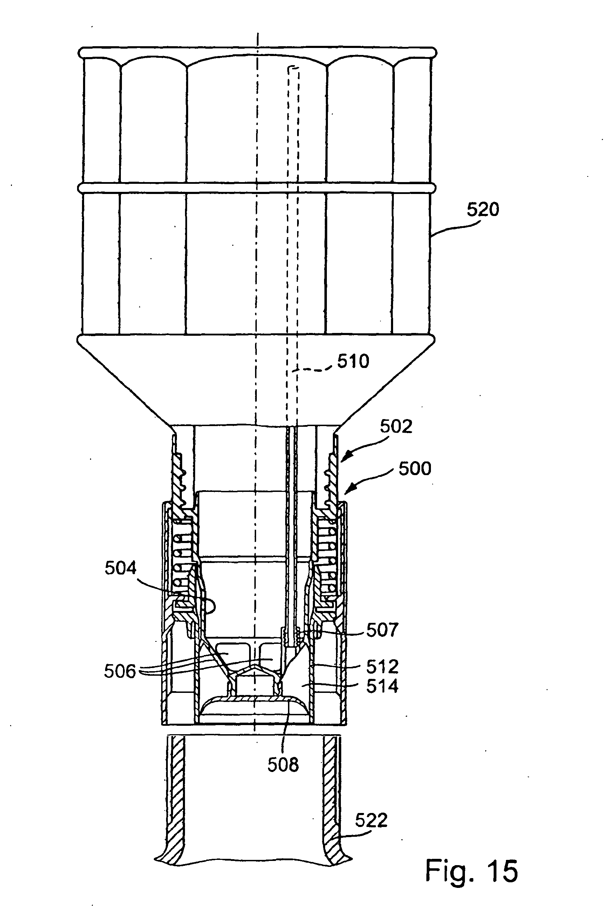

Die Schnittansichten der Fig. 9a, 9b und 9c zeigen eine Verbindungsbaugruppe 400 gemäß einer vierten Ausführungsform der Erfindung in drei verschiedenen Stadien eines Befüllvorgangs. So zeigt die Fig. 9a eine Schließstellung, in der keine Strömungsverbindung von einem nicht dargestellten Ausgangsbehälter zu einem nicht dargestellten Zielbehälter und durch die Verbindungsbaugruppe 400 hindurch besteht. Fig. 9b zeigt die Verbindungsbaugruppe der Fig. 9a in einer Betriebsstellung, in der die Verbindungsbaugruppe bereits auf den nicht dargestellten Zielbehälter aufgeschraubt ist und sich dadurch in einem entriegelten Zustand befindet. Die Fig. 9c schließlich zeigt eine Öffnungsstellung der Verbindungsbaugruppe 400, in der eine Strömungsverbindung zwischen dem nicht dargestellten Ausgangsbehälter und dem nicht dargestellten Zielbehälter und durch die Verbindungsbaugruppe 400 hindurch besteht. Die Anordnung des Ausgangsbehälters und des Zielbehälters an der Verbindungsbaugruppe 400 erfolgt in gleicher Weise, wie in Zusammenhang mit Fig. 15 beschrieben.

Die Verbindungsbaugruppe 400 der Fig. 9a weist eine Auslasszylinderbaugruppe 402 auf, die aus dem eigentlichen Auslasszylinder 404 mit mehreren Auslassöffnungen 406 sowie einer Dichtung 408 und einem Anschlussstutzen 410 für den Ausgangsbehälter besteht, Weiter sind ein Steuerzylinder 412 mit daran einstückig angeformten Sperrklinken 414, eine Außenhülse 416 und eine Schraubenfeder 418 zwischen der Außenhülse 416 und dem Anschlussstutzen 410 der Austasszytinderbaugruppe 402 vorgesehen. Die Schraubenfeder 418 kann einstückig an die Außenhülse 416 oder die Auslasszylinderbaugruppe 402 angespritzt sein. Der Anschlussstutzen 410 wird mit einem passenden Außengewinde des nicht dargestellten Ausgangsbehälters verschraubt, so dass zwischen einem Innenraum des Ausgangsbehälters und der Auslasszylinderbaugruppe 402 eine Strömungsverbindung besteht. Der Anschlussstutzen 410 ist oberhalb seiner Innengewindegänge mit mehreren, auf seinen Innenumfang verteilten Rastnocken 420 versehen, die mit passenden Rastnocken des nicht dargestellten Ausgangsbehälters einrasten können. Nach dem vollständigen Aufschrauben des Anschlussstutzens 410 auf den Ausgangsbehälter sind die Verbindungsbaugruppe 400 und der Ausgangsbehälter dann so fest miteinander verbunden, dass die nachfolgend noch zu erläuternde Bedienung der Verbindungsbaugruppe und speziell deren Aufschrauben auf den Zielbehälter und deren Bewegung zwischen einer Öffnungsstellung und einer Schließstellung alleine durch Bewegen des Ausgangsbehälters erfolgen kann. Die Verbindungsbaugruppe 400 muss hierzu nicht mehr angefasst werden. Dies ist insbesondere bei schlechter Zugänglichkeit, beispielsweise im Motorraum eines Kraftfahrzeugs, von großer Bedeutung.

Auch nach dem Aufschrauben des Anschlussstutzens 410 auf den Ausgangsbehälter verbleibt die Verbindungsbaugruppe 400 in dem in Fig. 9a dargestellten Schließzustand. Selbst wenn versucht würde, die Auslasszylinderbaugruppe 402 relativ zur Außenhülse 416 zu verschieben, so wäre eine solche Verschiebung lediglich in sehr geringem Ausmaß möglich, hätte aber in jedem Fall keinen Einfluss auf den Schließzustand der Verbindungsbaugruppe 400. In der Darstellung der Fig. 9a nach oben hin ist eine Verschiebung der Auslasszylinderbaugruppe 402 relativ zur Außenhülse 416 durch Anschläge 422 begrenzt, an denen nach außen vorragende und vom Anschlussstutzen 410 ausgehende Vorsprünge 424 anschlagen. Die Vorsprünge 424 sind dabei jeweils in Längsführungen 426 in der Außenhülse 416 geführt. Die Auslasszylinderbaugruppe 402 kann somit lediglich parallel zur Mittellängsachse 428 relativ zur Außenhülse 416 verschoben werden. Nach unten hin wird eine Verschiebung der Auslasszylinderbaugruppe 402 durch den Anschlag des umlaufenden Außenabsatzes 430 des Auslasszylinders 404 an der Oberseite der im Querschnitt L-förmigen Sperrklinken 414 gestoppt.

Die Sperrklinken 414 sind einstückig an den Steuerzylinder 412 angeformt, der wiederum mit einer umlaufenden Außenschulter 432 auf nach innen, zum Steuerzylinder 412 hin vorragenden Vorsprüngen 434 der Außenhülse 416 aufliegt. Eine Relativbewegung des Auslasszylinders 404 zum Steuerzylinder 412 ist dadurch in sehr engen Grenzen möglich und führt in jedem Fall nicht zu der Freigabe eines Strömungspfades vom Ausgangsbehälter durch die Auslassöffnungen 406 hindurch in den Zielbehälter.

Auch dann, wenn der Ausgangsbehälter auf den Anschlussstutzen 410 der Verbindungsbaugruppe 400 aufgeschraubt ist, kann ein Medium aus dem Ausgangsbehälter lediglich durch die Auslassöffnungen 406 in den Steuerzylinder 412 gelangen und wird dann aber durch die Dichtung 408, die mit einer umlaufenden Dichtlippe an einer Innenwandung des Steuerzylinders 412 anliegt, in dem Ringraum zwischen der Mantelfläche des Auslasszylinders 404, in der die Ausgangsöffnungen 406 vorgesehen sind, der Dichtung 408 und der Innenwandung des Steuerzylinders 412 gehalten. In Richtung auf den Ausgangsbehälters zu kann die Flüssigkeit aus diesem Ringraum ebenfalls nicht austreten, da am Auslasszylinder 404 eine umlaufende Dichtlippe 436 angeformt ist, die eine Rückströmung des Mediums in den Bereich zwischen dem Auslasszylinder 404 und der Außenhülse 416 verhindert.

Um einen Strömungspfad von dem Ausgangsbehälter in den Zielbehälter freizugeben; muss die Verbindungsbaugruppe 400 zunächst in die in Fig. 9b dargestellte Betriebsstellung gebracht werden. Dies geschieht durch Aufschrauben der Außenhülse 416 auf den Anschlussstutzen des nicht dargestellten Zielbehälters. Die Außenhülse 416 ist in ihrem unteren Bereich dazu mit einem Innengewinde 438 versehen, das auf ein entsprechendes Außengewinde eines Anschlussstutzens des Zielbehälters aufgeschraubt wird. Wie bereits erwähnt wurde, muss zum Aufschrauben der Verbindungsbaugruppe 400 auf den Anschlussstutzen des Zielbehälters die Verbindungsbaugruppe 400 nicht selbst gedreht werden, sondern dies kann durch Drehen des im allgemeinen besser zugänglichen Ausgangsbehälters erfolgen. Da nämlich der Ausgangsbehälter durch die Rastnocken 420 jedenfalls weitgehend drehfest in dem Anschlussstutzen 410 der Auslasszylinderbaugruppe 402 gehalten ist und die Auslasszylinderbaugruppe 402 drehfest an der Außenhülse 416 angeordnet ist, bewirkt ein Drehen des Ausgangsbehälters um die Mittelachse 428, dass sich die gesamte Verbindungsbaugruppe 400 mitdreht und dadurch das Innengewinde 438 auf ein Außengewinde des Zielbehälters aufgeschraubt werden kann.

Nach dem vollständigen Aufschrauben der Außenhülse 416 auf den Anschlussstutzen des Zielbehälters drückt der obere Rand des Zielbehälters an den mittels der Pfeile 440 markierten Stellen den Steuerzylinder 412 relativ zur Außenhülse 416 nach oben. Ein umlaufender Vorsprung 442 an der Außenhülse 416, der in das Innere der Außenhülse 416 vorragt, drückt dadurch auf die nach außen vorragenden Anlagenflächen 444 der Sperrklinken 414, wodurch die Sperrklinken 414 nach außen geschwenkt werden und die umlaufende Außenschulter 430 des Auslasszylinders 404 freigeben. Die Auslasszylinderbaugruppe 402 kann dadurch relativ zur Außenhülse 416 und relativ zum Steuerzylinder 412 nach unten verschoben werden, bis die in Fig. 9c dargestellte ÖffnungsStellung erreicht ist.

Bei einer Verschiebung der Auslasszylinderbaugruppe 402 relativ zur Außenhülse 416 nach unten wird der Steuerzylinder relativ zur Außenhülse 416 festgehalten, da ja der obere Rand des Anschlussflansches des Zielbehälters an den Stellen 440 den Steuerzylinder 412 nach oben gegen den Vorsprung 442 an der Außenhülse 416 drückt. Das Verschieben der Auslasszylinderbaugruppe 402 nach unten erfordert lediglich das Ausüben einer Kraft auf den mit der Verbindungsbaugruppe 400 verbundenen Ausgangsbehälter. Sobald der auf der Innenwandung des Steuerzylinders 412 anliegende umlaufende Rand der Dichtung 408 den Steuerzylinder 412 verlässt, ist ein Strömungspfad zwischen dem Ausgangsbehälter und dem Zielbehälter freigegeben. Flüssiges oder rieselfähiges Medium aus dem Ausgangsbehälter kann dann durch den Auslasszylinder 404 durch die insgesamt sechs Auslassöffnungen 406 mit großem Querschnitt und durch den Ringspalt zwischen der Dichtung 408 und dem unteren Rand des Steuerzylinder 412 in den Zielbehälter gelangen. Aufgrund des großen Querschnitts der Auslassöffnungen 406 kann ein Medientausch mit großer Geschwindigkeit erfolgen.

Die in Fig. 9c dargestellte Öffnungsstellung der Verbindungsbaugruppe 400 stellt eine Endstellung dar, da in dieser Stellung der Auslasszylinder 404 mit seiner umlaufenden Außenschulter 430 an der Rückseite der Sperrklinken 414 anschlägt. Darüber hinaus schlägt eine unterhalb der umlaufenden Außenschulter 430 angeordnete kegelstumpfförmige Außenfläche des Auslasszylinders 404 an einer ebenfalls kegelstumpfförmigen Innenfläche des Steuerzylinders 412 an und verhindert dadurch eine weitere Verschiebung des Auslasszylinders 404 relativ zum Steuerzylinder 412 in der Darstellung der Fig. 9c nach unten.

Um den Strömungspfad zwischen Ausgangsbehälter und Zielbehälter zu unterbrechen, muss lediglich der Ausgangsbehälter in Richtung vom Zielbehälter weggezogen werden. Bei entsprechender Auslegung der Schraubenfeder 418 erfolgt eine solche Rückbewegung automatisch, so dass zum Unterbrechen des Strömungspfades der Ausgangsbehälter lediglich losgelassen oder eine Druckkraft in Richtung auf den Zielbehälter verringert werden muss. Nach dem vollständigen Zurückbewegen des Ausgangsbehälters wird wieder die in Fig. 9b dargestellte Betriebsstellung der Verbindungsbaugruppe 400 erreicht, die so lange beibehalten wird, solange die Außenhülse 416 noch auf den Anschlussstutzen des Zielbehälters aufgeschraubt ist. Nach dem Abschrauben der Verbindungsbaugruppe 400 vom Anschlussstutzen des Zielbehälters kann sich dann der Steuerzylinder 412 relativ zur Außenhülse 416 wieder nach unten bewegen, bis sein Vorsprung 432 am Vorsprung 434 der Außenhülse 416 anschlägt und sich die Sperrklinken 414 wieder in die in der Fig. 9a dargestellte Sperrstellung zurückbewegt haben.

Ein Entleeren des Ausgangsbehälters ist somit lediglich dann möglich, wenn die Verbindungsbaugruppe 400 auf einen Zielbehälter aufgeschraubt ist. In dem in Fig. 9a dargestellten Schließzustand verhindern die zahlreichen, in Kranzform angeordneten Sperrklinken 414 zuverlässig ein Freigeben eines Strömungspfades durch die Verbindungsbaugruppe 400 hindurch.

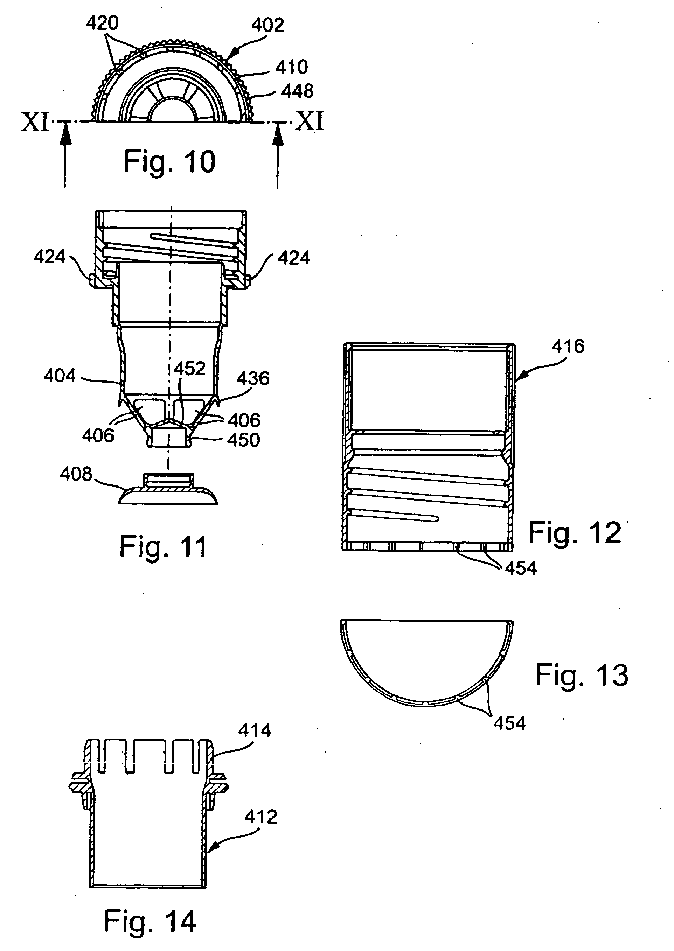

Die Darstellung der Fig. 10 zeigt die Draufsicht auf eine entlang einer Mittenebene XI-XI durchgeschnittene Auslasszylinderbaugruppe 402. Gut zu erkennen ist eine im Bereich des Anschlussstutzens 410 vorgesehene Rändelung 448, die das Aufschrauben der Auslasszylinderbaugruppe 402 auf den Anschlussstutzen eines Ausgangsbehälters erleichtert. Ebenfalls gut zu erkennen sind die Rastnocken 420 am Innenumfang des Anschlussstutzens 410, die im vollständig aufgeschraubten Zustand mit passenden Rastnocken am Anschlussstutzen des Ausgangsbehälters einrasten und dadurch eine Verdrehsicherung der Auslasszylinderbaugruppe 402 am Ausgangsbehälter bewirken.

Die Auslassöffnungen 406 sind am Außenmantel eines sich in Richtung auf den Zielbehälter zu kegelförmig verjüngenden Abschnitts des Auslasszylinders 404 angeordnet und stellen einen sehr großen freien Querschnitt für auszugebendes Medium bereit.

Die Darstellung der Fig. 11 zeigt eine Ansicht der geschnittenen Auslasszylinderbaugruppe 402 der Fig. 10. Gut zu erkennen sind die Vorsprünge 424, die in passenden Führungen der Außenhülse 416 geführt werden können und für eine drehfeste aber in axialer Richtung verschiebbare Anordnung der Auslasszylinderbaugruppe 402 in der Außenhülse 416 sorgen. Weiterhin gut zu erkennen ist die umlaufende Dichtlippe 436, die am Außenumfang des Auslasszylinders 404 am Übergang zwischen einem zylindrischen Abschnitt und dem kegelstumpf förmigen Abschnitt mit den Auslassöffnungen 406 angeformt ist. An diesen kegelstumpfförmigen Abschnitt mit den Auslassöffnungen 406 schließt sich ein zylindrischer Abschnitt 450 an, auf den die Dichtung 408 mit ihrem passenden Anschlussstück aufgeschoben und dort gesichert werden kann. Im Bereich des kegelstumpfförmigen Abschnitts ist noch zu erkennen, dass eine beim Medientausch zwischen Ausgangsbehälter und Zielbehälter sich dem ausströmenden Medium entgegenstellende Fläche 452 kegelförmig gestaltet ist, so dass sich die Spitze dieser flachen, kegelförmigen Fläche 452 dem aus dem Ausgangsbehälter und durch den Auslasszylinder 404 durchströmenden Medium entgegenstellt. Mit der kegelförmigen Fläche 452 kann für gute und möglichst verlustarme Strömungsverhältnisse im Auslasszylinder 404 gesorgt werden, so dass ein Medientausch mit hoher Geschwindigkeit stattfinden kann.

Die Darstellung der Fig. 12 zeigt eine zur Hälfte aufgeschnittene Außenhülse 416. Zusätzlich zur Darstellung in den Fig. 9a, 9b und 9c sind am unteren Rand der Außenhülse 416 Rastnasen 454 zu erkennen, die vom Innenumfang der Außenhülse 416 aus nach innen vorragen und mit passenden Rastnocken 454 am Anschlussstutzen eines Zielbehälters eingreifen können. Die Rastnocken 454 können dann zusätzlich dafür sorgen, dass die Verbindungsbaugruppe 400 jedenfalls so fest auf dem Zielbehälter sitzt, dass nicht die Gefahr besteht, die Verbindungsbaugruppe 400 während des Befüllens versehentlich wieder vom Zielbehälter abzuschrauben. Zweckmäßigerweise sind die Rastnocken 454 dabei so angeordnet, dass erst dann, wenn die Rastnocken 454 der Außenhülse 416 mit passenden Gegenrastnocken am Zielbehälter eingreifen, die Sperrklinken 414 gemäß Fig. 9b in die Freigabestellung geschwenkt sind. Die Rastnocken 454 und deren Anordnung am Innenumfang der Außenhülse 416 ist auch in Fig. 13 zu erkennen.

Die Darstellung der Fig. 14 zeigt eine Schnittansicht des Steuerzylinders 412 mit den einstückig an den Steuerzylinder 412 angespritzten Sperrklinken 414.

Die Schnittansicht der Fig. 15 zeigt eine vierte Ausführungsform einer erfindungsgemäßen Verbindungsbaugruppe 500. Die Verbindungsbaugruppe 500 wird lediglich in Bezug auf diejenigen Teile detailliert erläutert, die sich von der Verbindungsbaugruppe 400 der Fig. 9a, 9b, 9c unterscheiden. Eine Auslasszylinderbaugruppe 502 ist an und für sich identisch zur Auslasszylinderbaugruppe 402 der Verbindungsbaugruppe 400 aufgebaut, lediglich in dem kegelstumpfförmigen Bereich mit Auslassöffnungen 506 ist anstelle einer der Auslassöffnungen ein Schlauchanschlussstutzen 507 vorgesehen. In den Schlauchanschlussstutzen 507 ist ein Entlüftungsschlauch 510 eingeschoben, der eine Verbindung zwischen einem Ausgangsbehälter 520 und dem Ringraum 514 zwischen Auslasszylinder 504, Dichtung 508 und Innenwandung des Steuerzylinders 512 herstellt. Der Entlüftungsschlauch 510 ragt dabei so weit in den Innenraum des Ausgangsbehälters 520 vor, dass sich dieser in einem auf einen Zielbehälter 522 aufgesetzten Zustand der Verbindungsbaugruppe 500 und des Ausgangsbehälters 520 oberhalb eines Flüssigkeitsspiegels im Ausgangsbehälter 520 befindet. Lediglich schematisch und abschnittsweise ist in der Darstellung der Fig. 15 der Zielbehälter 522 im Bereich seines Anschlussstutzens dargestellt. Während des Medientauschs mit dem Zielbehälter kann dadurch die durch das in den Zielbehälter 522 einfließende Medium verdrängte Luft durch den Schlauchanschlussstutzen 507 und den Entlüftungsschlauch 510 in den Ausgangsbehälter 520 gelangen. Somit findet unter Verwendung der Verbindungsbaugruppe 500 ein bidirektionaler Medientausch statt, indem nämlich flüssiges oder rieselfähiges Medium aus dem Ausgangsbehälter 520 in den Zielbehälter 522 gelangt und gleichzeitig verdrängte Luft aus dem Zielbehälter 522 in den Ausgangsbehälter 520 gelangt. Gerade bei aggressiven oder giftigen Medien kann dadurch ein während des Medientauschs geschlossenes System realisiert werden.

Wie in der Darstellung der Fig. 15 zu erkennen ist, weist der Ausgangsbehälter 520 eine an die Einbauverhältnisse angepasste Form mit einem sich an seinen Anschlussstutzen anschließenden kegelstumpfförmigen Bereich auf. Der sich an den kegelstumpfförmigen Bereich anschließende allgemein zylindrische Abschnitt des Ausgangsbehälters 520 ist mit einem mehreckigen Außenumfang gestaltet, um den Ausgangsbehälter 520 für einen Bediener angreifbar zu gestalten, so dass, wie bereits erläutert wurde, die Verbindungsbaugruppe 500 allein durch Handhabung des Ausgangsbehälters 520 auf den Zielbehälter 522 aufgeschraubt, geöffnet und nach erfolgtem Medientausch auch wieder von dem Zielbehälter 522 abgeschraubt werden kann.

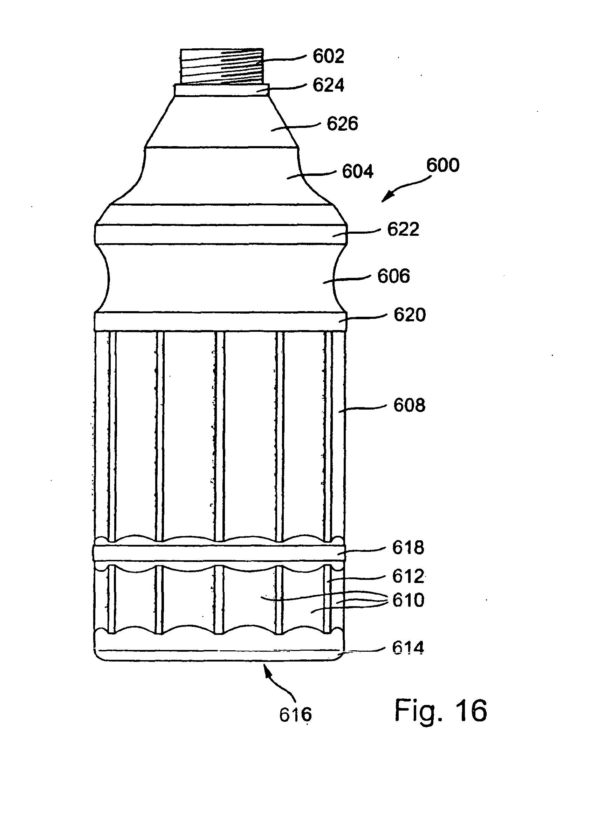

Die Seitenansicht der Fig. 16 zeigt einen Ausgangsbehälter 600, der mit einer der vorstehend beschriebenen Verbindungsbaugruppen verbunden werden kann. Hierzu würde in nicht dargestellter Weise ein Flaschengewinde 602 der Flasche 600 mit einer Verbindungsbaugruppe, beispielsweise mit deren Außenhülse, verbunden. Um auch bei sehr beengten Raumverhältnissen, beispielsweise im Motorraum eines Kraftfahrzeugs, den Ausgangsbehälter 600 mit aufgeschraubtrer Verbindungsbaugruppe gut handhaben zu können und speziell, um die verschiedenen Stellungen der Verbindungsbaugruppe lediglich durch Handhabung der Flasche 600 einstellen zu können, weist diese zwei Fingerlaufrillen 604 und 606, einen im Querschnitt zwölfeckigen Hauptkörper 608 und darüber hinaus Fingergreiftaschen 610 auf. Die Fingergreiftaschen 610 sind jeweils als kreiszylinderabschnittsförmige Vertiefungen ausgebildet, die sich mit ihrer Längsachse parallel zu einer Längsachse der Flasche 600 erstrecken. Die mehreren Fingergreiftaschen 610 sind so aneinander gesetzt, dass jeweils zwei Fingergreiftaschen 610 durch einen in Längsrichtung der Flasche 600 verlaufenden Steg 612 miteinander verbunden sind. Alle Fingergreiftaschen 610 sind ringförmig um den Außenumfang der Flasche 600 verteilt und unmittelbar oberhalb eines Standrings 614 der Flasche 600 angeordnet, die dann in den Flaschenboden 616 übergeht. Zwischen den in Ringform angeordneten Fingergreiftaschen 610 und dem Hauptkörper 608 ist ein erster Versteifungsring 618 angeordnet, der der vorzugsweise aus Kunststoff hergestellten Flasche 600 eine erhöhte Steifigkeit verleiht. Ein weiterer Versteifungsring 620 ist zwischen dem Hauptkörper 608 und der Fingerlaufrille 606 angeordnet, ein dritter Versteifungsring 622 ist zwischen den beiden Laufrillen 606 und 604 angeordnet. Ausgehend vom Flaschengewinde 602 folgt zunächst ein Rastnockenring 624, der für einen festen Halt im Anschlussgewinde einer Verbindungsbaugruppe sorgen kann. An den Rastnockenring 624 schließt ein sich kegelförmig erweiternder Bereich 626 an, der dann in die erste Fingerlaufrille 604 übergeht. Auch im Bereich der ersten Fingerlaufrille 604 findet eine Querschnittserweiterung der Flasche 600 statt, und erst im Bereich des Versteifungsrings 622 wird dann der größte Durchmesser der Flansche 600 erreicht.

Nach dem Aufschrauben einer Verbindungsbaugruppe auf das Flaschengewinde 602, wobei beim Aufschrauben der Verbindungsbaugruppe auch eine Versiegelung der Flasche 600 automatisch durchtrennt werden kann, befindet sich die Verbindungsbaugruppe, wie zuvor beschrieben wurde, ja in einer geschlossenen Stellung. Um die Verbindungsbaugruppe mit dem aufgeschraubten Ausgangsbehälter 600 in eine Betriebsstellung zu bringen, muss die Verbindungsbaugruppe auf den Anschlussstutzen eines Zielbehälters aufgesetzt, beispielsweise aufgeschraubt werden. Dies kann lediglich durch Handhabung des Ausgangsbehälters 600 erfolgen. Indem nämlich eine erste Hand des Bedieners in einen oder beide Fingerlaufrillen 604, 606 eingreift und die andere Hand des Bedieners am Standring 614 und in wenigstens eine der Fingergreiftaschen 610 eingreift. Beim Drehen des Ausgangsbehälters 600 wird die Drehbewegung nun mit der an den Fingergreiftaschen 610 angreifenden Hand aufgebracht und die Finger der zweiten Hand können in den Laufrillen 604, 606 entlang gleiten. Schon kurz nach dem Aufsetzen auf den Zielbehälter kann dann sogar ein weiter einhändiges Aufdrehen der Verbindungsbaugruppe mit dem Ausgangsbehälter 600 auf den Zielbehälter erfolgen. Die Verbindungsbaugruppe kann dann, wie ebenfalls bereits beschrieben wurde, durch einfaches Handhaben des Ausgangsbehälters 600 in eine geöffnete Stellung und wieder zurück in die Betriebsstellung gebracht werden und, beispielsweise nach vollständigem Entleeren des Ausgangsbehälters, kann dieser wieder zusammen mit der Verbindungsbaugruppe vom Zielbehälter abgeschraubt werden.

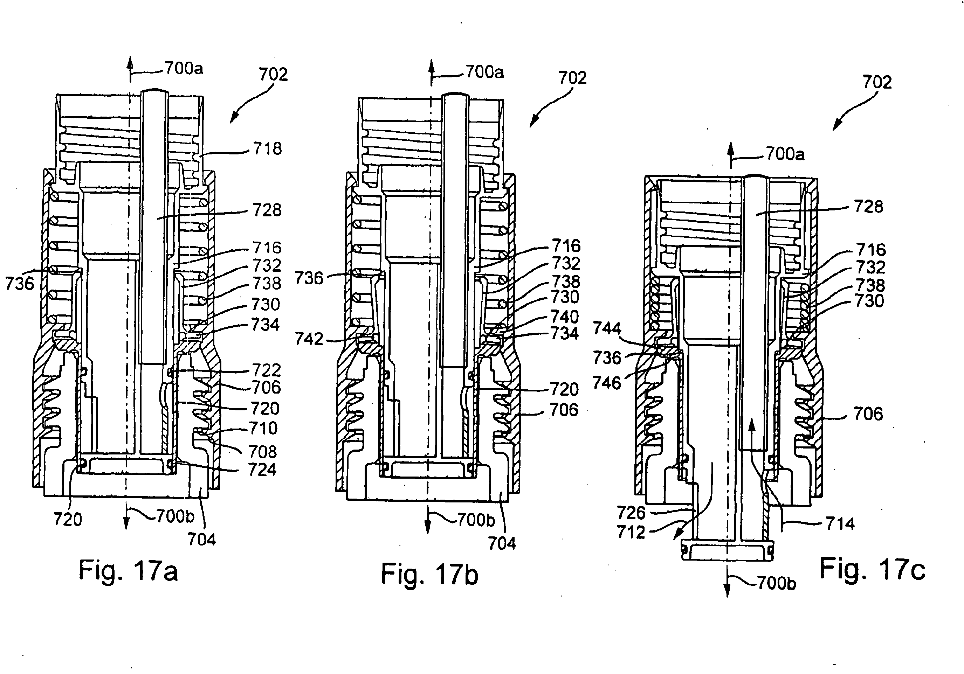

Die Schnittansichten der Fig. 17a, 17b und 17c zeige eine erfindungs-gemäße Verbindungsbaugruppe 702 gemäß einer fünften Ausführungsform in verschiedenen Zuständen.

Die Verbindungsbaugruppe 702 ist in den Darstellungen der Fig. 17a, 17b und 17c mit einem Zielbehälter 704 verbunden, indem eine Außenhülle 706 der Verbindungsbaugruppe 702 mit einem Innengewinde 708 auf einen Schraubstutzen 710 des Zielbehälters 704 aufgeschraubt ist. Die Zielbehälter 704 ist dabei lediglich abschnittsweise und mit seinem Anschraubstutzen 710 dargestellt.

Im Zustand der Fig. 17a ist die Verbindungsbaugruppe 702 noch nicht vollständig auf den Zielbehälter 704 aufgeschraubt und befindet sich noch in einer verriegelten Schließstellung. Gemäß der Darstellung der Fig. 17b ist die Verbindungsbaugruppe 702 vollständig auf den Aufschraubstutzen 710 des Zielbehälters 704 aufgeschraubt und befindet sich in einer Betriebsstellung, in der die Verbindungsbaugruppe zwar noch keinen Mediendurchfluß ermöglicht, sich aber bereits im entriegelten Zustand befindet. Die Fig. 17c schließlich zeigt eine Offenstellung der Verbindungsbaugruppe 702, in der gemäß einem Pfeil 712 Medium vom nicht dargestellten Ausgangsbehälter in den Zielbehälter fließen kann und umgekehrt Luft gemäß dem Pfeil 714 aus dem Zielbehälter in den Ausgangsbehälter zurückströmen kann.

Anhand der Fig. 17a ist zu erkennen, dass die Verbindungsbaugruppe 702 einen Auslasszylinder 716 aufweist, der einstückig mit einem Anschlussteil 718 mit Innengewinde versehen ist, mit dem die Verbindungsbaugruppe 702 auf einen nicht dargestellten Aufschraubstutzen eines Ausgangsbehälters aufgeschraubt werden kann. Die Verbindungsbaugruppe weist weiterhin einen Steuerzylinder 720 auf, in dem der Auslasszylinder verschiebbar geführt ist und gegen den der Auslaßzylinder in der in Fig. 17a dargestellten Schließstellung mittels zweier Dichtringe 722 und 724 abgedichtet ist. Wie anhand der Fig. 17a, 17b und 17c zu erkennen ist, werden durch eine Verschiebung des Auslasszylinders 716 gemäß dem Pfeil 700b nach unten bei feststehendem Auslasszylinder 720 dessen Auslassöffnungen 726 freigegeben, so dass Medium gemäß dem Pfeil 712 durch die Verbindungsbaugruppe 702 hindurchströmen und umgekehrt Luft durch die Auslaßöffnungen 726 und einen Entlüftungsschlauch 728 wieder in den Ausgangsbehälter zurückströmen kann. Die Dichtringe 722, 724 sorgen dafür, dass auch sehr kriechfreudige Medien zuverlässig in dem in Fig. 17a dargestellten Zustand innerhalb der Verbindungsbaugruppe 702 gehalten werden und insbesondere während des Aufschraubens auf den Zielbehälter 704 noch kein Medium austritt.

In der in Fig. 17a dargestellten Schließstellung ist eine Bewegung des Auslasszylinders 716 relativ zum Steuerzylinder 720 weitgehend durch Sperrklinken 730 blockiert, die einen L-förmigen Querschnitt aufweisen und jeweils einen Blockierschenkel 732 und einen Betätigungsschenkel 734 aufweisen. Um den Umfang des kreiszylindrischen Auslasszylinders 716 herum sind mehrere Sperrklinken 730 gleichmäßig voneinander beabstandet angeordnet. Die mehreren Sperrklinken 730 werden in der in Fig. 17a dargestellten Blockierstellung beispielsweise durch elastische, nicht dargestellte Stege gehalten, wie sie in der schematischen Darstellung der Fig. 4 beispielhaft mit den Bezugsziffern 294 und 296 angedeutet sind. Alternativ sind die Sperrklinken 730 im Bereich ihrer Betätigungsschenkel 734 mittels eines durchgehenden Rings miteinander verbunden, wie er beispielsweise in den Fig. 5 und 6 beispielhaft dargestellt ist.

Es ist zu erkennen, dass bei eine Bewegung des Auslasszylinders 716 nach unten schon nach einer kurzen Wegstrecke ein umlaufender und sich nach außen erstreckender Vorsprung 736 des Auslasszylinders 716 auf ein jeweiliges freies, oberes Ende der Blockierschenkel 732 der Sperrklinken 730 aufläuft. Dadurch ist eine Bewegung des Auslaßzylinders 716 relativ zum Steuerzylinder 720 in der Richtung nach unten gemäß dem Pfeil 700b blockiert.

In der umgekehrten Richtung nach oben, also gemäß dem Pfeil 700a, ist der Auslasszylinder 716 mittels der Feder 738 vorgespannt, wobei eine Bewegung nach oben dadurch blockiert wird, dass ein sich nach außen erstreckender, umlaufender Absatz des Anschlussteils 718 an einem ebenfalls umlaufenden, nach innen vorkragenden Vorsprung der Außenhülse 706 anliegt. Vor dem Aufschrauben der Verbindungsbaugruppe 702 wird diese durch die Vorspannung der Feder 738 demzufolge in der in Fig. 17a dargestellten Schließstellung verbleiben und kann aufgrund der sich in der Sperrstellung befindlichen Sperrklinken 730 auch nicht gegen die Kraft der Feder 738 in die in Fig. 17c dargestellte Offenstellung bewegt werden.

In der Darstellung der Fig. 17b ist die Außenhülse 706 vollständig auf den Aufschraubstutzen 710 des Zielbehälters 704 aufgeschraubt, wodurch ein oberhalb der Betätigungsschenkel 734 der Sperrklinken 730 liegender und sich nach innen erstreckender umlaufender Absatz der Außenhülse 706 relativ zum Zustand der Fig. 17a nach unten bewegt wird und dadurch in Anlage an die Oberseite des Betätigungsschenkels 734 kommt und diesen Betätigungsschenkel 734 dann ein Stück weit nach unten drückt. Da die Sperrklinken 730 im Bereich des Übergangs zwischen Betätigungsschenkel 734 und Blockierschenkel 732 schwenkbar auf einem umlaufenden Wulst 742 des Steuerzylinders 720 gelagert sind, werden die Blockierschenkel 732 der Sperrklinken 730 dadurch nach außen geschwenkt. Die freien, nach innen abgekröpften Enden der Blockierschenkel 732 werden dadurch aus der Bewegungsbahn des umlaufenden Absatzes 736 des Auslasszylinders 716 herausbewegt, so dass dieser nun gegen die Kraft der Feder 738 nach unten verschoben werden kann.

Der letztendlich nach vollständiger Verschiebung nach unten erreichte Zustand entspricht einer Offenstellung und ist in Fig. 17c dargestellt. In dieser Offenstellung ist die Feder 738 vollständig zusammengedrückt und blockiert dadurch eine weitere Bewegung des Auslasszylinders 716 nach unten. Es ist aber festzuhalten, dass die Sperrklinken 730 im Unterschied zu der in den Fig. 3a bis 3c dargestellten Ausführungsform vollständig aus der Bewegungsbahn des Auslasszylinders 716 herausbewegt werden, so dass der Auslasszylinder 716 und speziell der umlaufende Absatz 736, vollständig an den Sperrklinken 730 vorbeibewegt werden kann. Es ist ohne weiteres zu erkennen, dass dies durch die nach innen abgekröpften freien Enden der Betätigungsschenkel 732 der Sperrklinken 730 erreicht wird und dass dadurch, bei entsprechender Gestaltung des Auslasszylinders 716, sehr große Öffnungswege erzielbar sind, die sehr große Durchflussquerschnitte freigeben können.

Hohe Durchflussgeschwindigkeiten können auch durch den erfindungsgemäß vorgesehenen Medientausch zwischen Ausgangsbehälter und Zielbehälter 704 erreicht werden. Das gemäß dem Pfeil 712 vom Ausgangsbehälter in den Zielbehälter fließende Medium wird durch gleichzeitig gemäß dem Pfeil 714 zurückfließende Luft ersetzt. Um eine wirkungsvolle Entlüftung des Zielbehälters 704 während der Befüllung sicherzustellen, erstreckt sich der Entlüftungsschlauch 728 so weit in den Ausgangsbehälter hinein, dass sich sein freies Ende zu Beginn des Füllvorgangs bereits oberhalb des Flüssigkeitsspiegels des Mediums im Ausgangsbehälter befindet.

Die Schraubenfeder 738 kann entweder als Stahlbauteil oder auch als Kunststoffbauteil ausgebildet sein. Dies erleichtert das Recycling der Verbindungsbaugruppe 702 erheblich, da diese dadurch mit Ausnahme der Dichtringe 722 und 724 vollständig aus Kunststoff, insbesondere dem gleichen Kunststoff, bestehen kann.

Im Bereich der Auslassöffnungen 726 im Auslasszylinder sind mehrere Auslassöffnungen 726 so über den Umfang des Auslasszylinders 716 verteilt, dass dieser in einem Winkelbereich von insgesamt etwa 270° geöffnet ist.

Der Steuerzylinder 720 weist einen sich nach außen erstreckenden, umlaufenden Flansch 744 auf, der nach dem Aufsetzen auf den Zielbehälter auf dem oberen Ende des Aufschraubstutzens 710 zu liegen kommt und dadurch eine Endstellung des Steuerzylinders 720 auf dem Zielbehälter 704 festlegt. Um diesen umlaufenden Flansch 744 und damit die Verbindungsbaugruppe 702 zuverlässig gegen den Zielbehälter 704 abzudichten, ist der umlaufende Flansch 744 auf seiner, dem Zielbehälter 704 zugewandten Unterseite mit einem umlaufenden Vorsprung 746 versehen, der im Querschnitt dreieckförmig ist und mit seiner Spitze auf der Oberseite des Aufschraubstutzens 710 des Zielbehälters 704 ruht. Beim Aufschrauben der Außenhülse 706 auf den Zielbehälter 704 wird dieser Vorsprung 746 flachgedrückt und sorgt dadurch für eine zuverlässige Abdichtung zwischen Verbindungsbaugruppe 702 und Zielbehälter 704. Da die Sperrklinken 730 erst dann von ihrer Blockierstellung in die Freigabestellung verschwenkt werden, wenn ein vordefinierter wegabhängiger und kraftabhängiger Schraubweg durchlaufen ist, ist auch gewährleistet, dass dieser Vorsprung 746, der die Funktion eines Dichtrings erfüllt, zuverlässig auf dem Aufschraubstutzen 710 dichtet.

## Patentansprüche

1. Verbindungsbaugruppe zur Verbindung
- eines Ausgangsbehälters (80; 180; 520) und
- eines Zielbehälters (70; 170; 522; 704),
wobei
die Verbindungsbaugruppe
- einen Auslasszylinder (30; 130; 230; 404; 504; 716) mit einer mit dem Ausgangsbehälter (80; 180; 520) verbindbaren ersten Stirnseite (34; 134; 234), wobei die erste Stirnseite (34; 134; 234) offen ist oder in ihrem Bereich wenigstens eine Öffnung des Auslasszylinders (30; 130, 230; 404; 504; 716) angeordnet ist, einer zweiten geschlossenen Stirnseite (38; 138; 238) und mindestens einer Auslassöffnung (40; 140; 240; 406; 506; 724) in einer Mantelfläche (32; 132; 132) sowie
- einen den Auslasszylinder (30; 130; 230; 404; 504; 716) im Bereich der Auslassöffnung (40; 140; 240; 406; 506; 724) umgebenden Steuerzylinder (50; 150; 250; 412; 512; 720)
aufweist, wobei der Auslasszylinder (30; 130; 230; 404, 504; 716) und der Steuerzylinder (50; 150; 250; 412; 512; 720) in einer Betriebsstellung, in der die Verbindungsbaugruppe mit dem Zielbehälter (70; 170; 522; 704) verbunden ist, zwischen einer Schließstellung, in der der Steuerzylinder (50; 150; 250; 412; 512; 720) einen Strömungspfad durch die Auslassöffnung (40; 140; 240; 406: 506; 724) des Auslassylinders (30; 130; 230; 404; 504; 716) unterbricht und einer Öffnungsstellung, in der der Steuerzylinder (50; 150; 250; 412; 512; 720) den Strömungspfad durch die Auslassöffnung (40; 140; 240; 406; 506; 724) des Auslasszylinders (30, 130; 230; 404; 504; 716) freigibt, verschiebbar zueinander ausgebildet sind,
wobei mindestens eine Sperrklinke (160; 260; 414; 730) die Verschiebbarkeit
des Steuerzylinders (150; 250; 412; 512; 720) relativ zum Auslasszylinder (130, 230: 404; 504: 716) in einer Blockierstellung der Sperrklinke (160: 260; 414; 730) blockiert,
**dadurch gekennzeichnet, dass**
die Verbindungsbaugruppe derart ausgebildet ist, dass durch deren Verbindung mit einem Ansatzstück (72;172; 710) des Zielbehälters (70; 170; 522: 704) eine Betätigung der Sperrklinke (160; 260; 414; 730) ausgelöst wird, durch die die Sperrklinke (160; 260; 414; 730) aus der Blockierstellung in eine Freigabestellung bewegt wird, in der die Verschiebbarkeit des Auslasszylinders (130; 230: 404; 504; 716) relativ zum Steuerzylinder (150; 250: 412; 512: 720) herstellbar ist.

2. Verbindungsbaugruppe nach Anspruch 1, **dadurch gekennzeichnet, dass** die Verbindungsbaugruppe einstückig mit dem Ausgangsbehälter (180) verbunden ist.

3. Verbindungsbaugruppe nach Anspruch 1, **dadurch gekennzeichnet, dass** die Verbindungsbaugruppe durch einen Steck-, Schraub- oder Bajonettverschluss (36; 82) mit dem Ausgangsbehälter (80; 520) verbindbar ist.

4. Verbindungsbaugruppe nach einem der vorstehenden Ansprüche, **dadurch gekennzeichnet, dass** die Verbindungsbaugruppe durch einen Steck-, Schraub-oder Bajonettverschluss (54; 72; 158, 174; 268) mit dem Zielbehälter (70; 170; 522; 704) verbindbar ist.

5. Verbindungsbaugruppe nach einem der vorstehenden Ansprüche, **dadurch gekennzeichnet, dass** der Steuerzylinder (50; 150; 250; 412, 512) in der Betriebsstellung ortsfest relativ zu einem Ansatzstück (72; 172) des Zielbehälters (70; 170; 522) angeordnet ist.

6. Verbindungsbaugruppe nach einem der vorstehenden Ansprüche, **dadurch gekennzeichnet, dass** die mindestens eine Auslassöffnung (40; 140; 240; 406; 506; 724) derart angeordnet ist, dass sie sich in der Betriebsstellung der Verbindungsbaugruppe und der Öffnungsstellung des Steuerzylinders (50; 150; 250; 412; 512; 720) und des Auslasszylinders (30; 130; 230; 404; 504; 716) zueinander innerhalb des Zielbehälters (70; 170; 522; 704) befindet.

7. Verbindungsbaugruppe nach einem der vorstehenden Ansprüche, **dadurch gekennzeichnet, dass** der Steuerzylinder (150; 412; 512; 720) und der Auslasszylinder (130; 404; 504; 716) durch eine Federkraft, die in Richtung der Schließstellung wirkt, gegeneinander kraftbeaufschlagt sind.

8. Verbindungsbaugruppe nach Anspruch 1, **dadurch gekennzeichnet, dass** die mindestens eine Sperrklinke (260; 414; 730) zwischen dem Steuerzylinder (250; 412; 512; 720) und einer Außenhülse (268; 416; 706) vorgesehen ist, wobei die Außenhülse (268; 416; 706) zur Befestigung am Ansatzstück des Zielbehälters (522; 704) relativ zum Steuerzylinder (250; 412; 512; 720) derart verschiebbar ist, dass die Sperrklinke (260; 414; 730) aus einer Blockierstellung in eine Freigabestellung gekippt wird.

9. Verbindungsbaugruppe nach Anspruch 8, **dadurch gekennzeichnet, dass** die mindestens eine Sperrklinke (260; 414; 730) L-förmig ausgebildet ist und einen Blockierschenkel (262; 734) und einen Betätigungsschenkel (264; 732) aufweist, wobei ein proximales Ende des Betätigungsschenkels (264; 732) auf einer Schwenkstufe (257) des Steuerzylinders (250; 720) aufliegt und ein distales Ende des Betätigungsschenkels (264; 732) in der Freigabestellung an einer Betätigungsstufe (269) der Außenhülse (267; 706) anliegt.

10. Verbindungsbaugruppe nach einem der Ansprüche 1 oder 8 oder 9, **dadurch gekennzeichnet, dass** die mindestens eine Sperrklinke (160; 260; 414; 730) mit einer Federkraft in Richtung der Blockierstellung beaufschlagt ist.

11. Verbindungsbaugruppe nach Anspruch 10, **gekennzeichnet durch** mindestens zwei am äußeren Umfang des Steuerzylinders (250) angeordnete Sperrklinken (260), die miteinander **durch** in Umfangsrichtung ausgerichtete elastische Zwischenelemente miteinander verbunden sind.

12. Verbindungsbaugruppe nach Anspruch 11, **dadurch gekennzeichnet, dass** die Sperrklinken (260) gemeinsam einstückig aus Kunststoff und die Zwischenelemente als elastische Kunststoffstege ausgebildet sind.

13. Verbindungsbaugruppe nach wenigstens einem der Ansprüche 1 oder 8 bis 12, **dadurch gekennzeichnet, dass** wenigstens zwei Sperrklinken (364; 414) an einem ringförmigen Sperrkranz (360) vorgesehen sind, wobei der Sperrkranz (360) eine Ringscheibe (362) und senkrecht zur Ringscheibe (362) angeordnete Sperrklinkenvorsprünge aufweist.

14. Verbindungsgruppe nach Anspruch 13, **dadurch gekennzeichnet, dass** die Ringscheibe (362) und die Sperrklinkenvorsprünge einstückig aus elastischem Material, insbesondere Kunststoff, ausgebildet sind.

15. Verbindungsbaugruppe nach wenigstens einem der vorstehenden Ansprüche, **dadurch gekennzeichnet, dass** die wenigstens eine Sperrklinke (414) einstückig an den Steuerzylinder (412; 512) angeformt ist.

16. Verbindungsbaugruppe nach Anspruch 15, **dadurch gekennzeichnet, dass** mehrere Sperrklinken (414) in einer ringförmigen Konfiguration vorgesehen sind, die an ein Ende des Steuerzylinders (412; 512) einstückig angeformt sind.

17. Verbindungsbaugruppe nach wenigstens einem der Ansprüche 1 oder 8 bis 16, **dadurch gekennzeichnet, dass** die mindestens eine Sperrklinke (730) einen Blockierschenkel (732) aufweist, wobei ein freies Ende des Blockierschenkels (732) in eine Bewegungsbahn des Steuerzylinders (716) vorragen kann und wobei das freie Ende des Blockierschenkels (732) in Richtung auf den Steuerzylinder (716) zu abgekröpft ist.

18. Verbindungsbaugruppe nach wenigstens einem der vorstehenden Ansprüche, **dadurch gekennzeichnet, dass** ein Entlüftungsschlauch (510; 728) vorgesehen ist, der im Bereich der Auslassöffnungen (506; 724) mit dem Auslasszylinder (504; 716) verbunden ist und dessen gegenüberliegendes Ende in den Ausgangsbehälter (520) hineinragt.

19. Verbindungsbaugruppe nach wenigstens einem der vorstehenden Ansprüche, **dadurch gekennzeichnet, dass** der Auslasszylinder (404; 504, 716) drehfest und axial verschiebbar in einer Außenhülse (416; 706) aufgenommen ist, wobei die Außenhülse (416; 706) auf einen Anschlussstutzen eines Zielbehälters (522; 704) aufschraubbar ist.

20. Verbindungsbaugruppe nach wenigstens einem der vorstehenden Ansprüche, **dadurch gekennzeichnet, dass** der Auslasszylinder (404; 504) eine einstückig angeformte umlaufende Dichtlippe (436) zur Abdichtung gegen eine Innenwandung des Steuerzylinders (412; 512) aufweist.

21. Verbindungsbaugruppe nach wenigstens einem der vorstehenden Ansprüche, **dadurch gekennzeichnet, dass** ein mit den Austassöffnungen (406; 506) versehenes Ende des Auslasszylinders (404; 504) mit einem Dichtungsteller (408; 508) versehen ist, dessen umlaufender Rand in der Schließstellung an einer Innenwandung des Steuerzylinders (412; 512) anliegt.

## Claims

1. Connecting subassembly for connecting
- an initial container (80; 180; 520) and
- a target container (70; 170; 522; 704),
the connecting subassembly having
- an outlet cylinder (30; 130; 230; 404; 504; 716) with a first end side (34; 134; 234) which can be connected to the initial container (80; 180; 520), wherein the first end side (34; 134; 234) is open or a least one opening of the outlet cylinder (30; 130; 230; 404; 504; 716) is arranged in the region thereof, with a second closed end side (38; 138; 238) and with at least one outlet opening (40; 140; 240; 406; 506; 724) in a surface area (32; 132; 132), and
- a control cylinder (50; 150; 250; 412; 512; 720) surrounding the outlet cylinder (30; 130; 230; 404; 504; 716) in the region of the outlet opening (40; 140; 240; 406; 506; 724),
wherein, in an operating position, in which the connecting subassembly is connected to the target container (70; 170; 522; 704), the outlet cylinder (30; 130; 230; 404; 504; 716) and the control cylinder (50; 150; 250; 412; 512; 720) are designed such that they can be displaced with respect to each other between a closed position, in which the control cylinder (50; 150; 250; 412; 512; 720) interrupts a flow path through the outlet opening (40; 140; 240; 406; 506; 724) of the outlet cylinder (30; 130; 230; 404; 504; 716), and an open position, in which the control cylinder (50; 150; 250; 412; 512; 720) releases the flow path through the outlet opening (40; 140; 240; 406; 506; 724) of the outlet cylinder (30; 130; 230; 404; 504; 716), wherin at least one locking pawl (160; 260; 414; 730) locks the displaceability of the control cylinder (150; 250; 412; 512; 720) relative to the outlet cylinder (130; 230; 404; 504; 716) in a blocking position of the locking pawl (160; 260; 414; 730),
**characterized in that**
the connecting subassembly is designed so that by its connection to an extension piece (72; 172; 710) of the target container (70; 170; 522; 704) an actuation of the locking pawl (160; 260; 414; 730) is triggered by which the locking pawl (160; 260; 414; 730) is moved from the blocking position into a release position, in which the displaceability of the outlet cylinder (130; 230; 404; 504; 716) with respect to the control cylinder (150; 250; 412; 512; 720) can be created.

2. Connecting subassembly according to Claim 1, **characterized in that** the connecting subassembly is connected to the initial container (180) as a single piece.

3. Connecting subassembly according to Claim 1, **characterized in that** the connecting subassembly can be connected to the initial container (80; 520) by a plug-in, screw-type or bayonet-type fastening (36; 82).

4. Connecting subassembly according to one of the preceding claims, **characterized in that** the connecting subassembly can be connected to the target container (70; 170; 522; 704) by a plug-in, screw-type or bayonet-type fastening (54, 72; 158, 174; 268).

5. Connecting subassembly according to one of the preceding claims, **characterized in that**, in the operating position, the control cylinder (50; 150; 250; 412; 512) is arranged in a fixed position relative to an extension piece (72; 172) of the target container (70; 170; 522).

6. Connecting subassembly according to one of the preceding claims, **characterized in that** the at least one outlet opening (40; 140; 240; 406; 506; 724) is arranged in such a manner that, in the operating position of the connecting subassembly and the open position of the control cylinder (50; 150; 250; 412; 512; 720) and of the outlet cylinder (30; 130; 230; 404; 504; 716) with respect to each other, it is located within the target container (70; 170; 522; 704) .

7. Connecting subassembly according to one of the preceding claims, **characterized in that** the control cylinder (150; 412; 512; 720) and the outlet cylinder (130; 404; 504; 716) are pressed against each other by a spring force which acts in the direction of the closed position.

8. Connecting subassembly according to Claim 1, **characterized in that** the at least one locking pawl (260; 414; 730) is provided between the control cylinder (250; 412; 512; 720) and an outer sleeve (268; 416; 706), wherein the outer sleeve (268; 416; 706), to fasten it to the extension piece of the target container (522; 704), can be displaced relative to the control cylinder (250; 412; 512; 720) in such a manner that the locking pawl (260; 414; 730) is tilted out of a blocking position into a release position.

9. Connecting subassembly according to Claim 8, **characterized in that** the at least one locking pawl (260; 414; 730) is of L-shaped design and has a blocking limb (262; 734) and an actuating limb (264; 732), wherein a proximal end of the actuating limb (264; 732) rests on a pivoting step (257) of the control cylinder (250; 720) and, in the release position, a distal end of the actuating limb (264; 732) bears against an actuating step (269) of the outer sleeve (267; 706).

10. Connecting subassembly according to one of Claims 1 or 8 or 9, **characterized in that** the at least one locking pawl (160; 260; 414; 730) is acted upon in the direction of the blocking position by a spring force.

11. Connecting subassembly according to Claim 10, **characterized by** at least two locking pawls (260) which are arranged on the outer circumference of the control cylinder (250) and are connected to each other by elastic intermediate elements oriented in the circumferential direction.

12. Connecting subassembly according to Claim 11, **characterized in that** the locking pawls (260) are together formed as a single piece from plastic, and the intermediate elements are designed as elastic plastic webs.

13. Connecting subassembly according to at least one of Claims 1 or 8 to 12, **characterized in that** at least two locking pawls (364; 414) are provided on an annular locking ring (360), wherein the locking ring (360) has an annular disk (362) and locking pawl projections arranged perpendicularly with respect to the annular disk (362).

14. Connecting subassembly according to Claim 13, **characterized in that** the annular disk (362) and the locking pawl projections are formed as a single piece from elastic material, in particular plastic.

15. Connecting subassembly according to at least one of the preceding claims, **characterized in that** the at least one locking pawl (414) is integrally formed on the control cylinder (412; 512) as a single piece.

16. Connecting subassembly according to Claim 15, **characterized in that** a plurality of locking pawls (414) are provided in an annular configuration and are integrally formed on one end of the control cylinder (412; 512) as a single piece.

17. Connecting subassembly according to at least one of Claims 1 or 8 to 16, **characterized in that** the at least one locking pawl (730) has a blocking limb (732), it being possible for a free end of the blocking limb (732) to project into a movement path of the control cylinder (716), the free end of the blocking limb (732) being bent in the direction of the control cylinder (716).

18. Connecting subassembly according to at least one of the preceding claims, **characterized in that** a venting tube (510; 728) is provided which is connected in the region of the outlet openings (506; 724) to the outlet cylinder (504; 716) and the opposite end of which projects into the initial container (520).

19. Connecting subassembly according to at least one of the preceding claims, **characterized in that** the outlet cylinder (404; 504; 716) is held in a rotationally fixed and axially displaceable manner in an outer sleeve (416; 706), wherein the outer sleeve (416; 706) can be screwed onto a connecting piece of a target container (522; 704).

20. Connecting subassembly according to at least one of the preceding claims, **characterized in that** the outlet cylinder (404; 504) has an encircling sealing lip (436), which is integrally formed on it as a single piece, for sealing it off from an inner wall of the control cylinder (412; 512).

21. Connecting subassembly according to at least one of the preceding claims, **characterized in that** one end of the outlet cylinder (404; 504), which end is provided with the outlet openings (406; 506), is provided with a sealing plate (408, 508), the encircling edge of which bears, in the closed position, against an inner wall of the control cylinder (412; 512) .

## Revendications

1. Ensemble de liaison pour la jonction
- d'un récipient de départ (80 ; 180 ; 520) et
- d'un récipient cible (70 ; 170 ; 522 ; 704), l'ensemble de liaison présentant
- un cylindre de sortie (30 ; 130 ; 230 ; 404 ; 504 ; 716) avec un premier côté avant (34 ; 134 ; 234) pouvant être relié au récipient de départ (80 ; 180 ; 520), le premier côté avant (34 ; 134 ; 234) étant ouvert ou au moins une ouverture du cylindre de sortie (30 ; 130 ; 230 ; 404 ; 504 ; 716) étant disposée dans son secteur, un second côté avant (38 ; 138 ; 238) fermé et au moins une ouverture de sortie (40 ; 140 ; 240 ; 406 ; 506 ; 724) dans une surface d'enveloppe (32 ; 132 ; 132) et
- un cylindre de commande (50 ; 150 ; 250 ; 412 ; 512 ; 720) entourant le cylindre de sortie (30 ; 130 ; 230 ; 404 ; 504 ; 716) dans la zone de l'ouverture de sortie (40 ; 140 ; 240 ; 406 ; 506 ; 724)
le cylindre de sortie (30 ; 130 ; 230 ; 404 ; 504 ; 716) et le cylindre de commande (50 ; 150 ; 250 ; 412 ; 512 ; 720) étant conçus de façon à pouvoir coulisser l'un par rapport à l'autre dans une position de service, dans laquelle l'ensemble de liaison est relié au récipient cible (70 ; 170 ; 522 ; 704), entre une position de fermeture, dans laquelle le cylindre de commande (50 ; 150 ; 250 ; 412 ; 512 ; 720) interrompt un chemin d'écoulement par l'ouverture de sortie (40 ; 140 ; 240 ; 406 ; 506 ; 724) du cylindre de sortie (30 ; 130 ; 230 ; 404 ; 504 ; 716) et une position d'ouverture, dans laquelle le cylindre de commande (50 ; 150 ; 250 ; 412 ; 512 ; 720) libère le chemin d'écoulement par l'ouverture de sortie (40 ; 140 ; 240 ; 406 ; 506 ; 724) du cylindre de sortie (30 ; 130 ; 230 ; 404 ; 504 ; 716).
un cliquet d'arrêt (160 ; 260 ; 414 ; 730) bloquant la possibilité de coulissement du cylindre de commande (150 ; 250 ; 412 ; 512 ; 720) par rapport au cylindre de sortie (130 ; 230 ; 404 ; 504 ; 716) dans une position de blocage du cliquet d'arrêt (160 ; 260 ; 414 ; 730),
**caractérisé en ce que**
l'ensemble de liaison est conçu de telle sorte que sa liaison avec un embout (72 ; 172 ; 710) du récipient cible (70 ; 170 ; 522 ; 704) déclenche un actionnement du cliquet d'arrêt (160 ; 260 ; 414 ; 730), par lequel le cliquet d'arrêt (160 ; 260 ; 414 ; 730) est déplacé de la position de blocage dans une position de libération dans laquelle la possibilité de coulissement du cylindre de sortie (130 ; 230 ; 404 ; 504 ; 716) peut être établie par rapport au cylindre de commande (150 ; 250 ; 412 ; 512 ; 720).

2. Ensemble de liaison selon la revendication 1, **caractérisé en ce que** l'ensemble de liaisons est relié d'une seule pièce au récipient de départ (180).

3. Ensemble de liaison selon la revendication 1, **caractérisé en ce que** l'ensemble de liaison peut être relié par une fermeture à emboîtement, à vis ou à baïonnette (36 ; 82) au récipient de départ (80 ; 520)

4. Ensemble de liaison selon l'une quelconque des revendications précédentes, **caractérisé en ce que** l'ensemble de liaison peut être relié au récipient cible (70 ; 170 ; 522 ; 704) par une fermeture à emboîtement, à vis ou à baïonnette (54 ; 72 ; 158 ; 174 ; 268).

5. Ensemble de liaison selon l'une quelconque des revendications précédentes, **caractérisé en ce que** le cylindre de commande (50 ; 150 ; 250 ; 412 ; 512) est disposé dans la position de service de façon fixe par rapport à un embout (72 ; 172) du récipient cible (70 ; 170 ; 522).

6. Ensemble de liaison selon l'une quelconque des revendications précédentes, **caractérisé en ce que** la au moins une ouverture de sortie (40 ; 140 ; 240 ; 406 ; 506 ; 724) est disposée de telle sorte qu'elle se trouve à l'intérieur du récipient cible (70 ; 170 ; 522 ; 704) dans la position de service de l'ensemble de liaison et la position d'ouverture du cylindre de commande (50 ; 150 ; 250 ; 412 ; 512, 720) et du cylindre de sortie (30 ; 130 ; 230 ; 404 ; 504 ; 716).

7. Ensemble de liaison selon l'une quelconque des revendications précédentes, **caractérisé en ce que** le cylindre de commande (150 ; 412 ; 512 ; 720) et le cylindre de sortie (130 ; 404 ; 504 ; 716) sont sollicités par force l'un par rapport à l'autre par une force de ressort qui agit dans le sens de la position de fermeture.

8. Ensemble de liaison selon la revendication 1, **caractérisé en ce que** le au moins un cliquet d'arrêt (260 ; 414 ; 730) est prévu entre le cylindre de commande (250 ; 412 ; 512 ; 720) et un manchon extérieur (268 ; 416 ; 706), le manchon extérieur (268 ; 416 ; 706) pour la fixation sur l'embout du récipient cible (522 ; 704) pouvant être déplacé par rapport au cylindre de commande (250 ; 412 ; 512 ; 720) de telle sorte que le cliquet d'arrêt (260 ; 414 ; 730) est basculé d'une position de blocage à une position de libération.

9. Ensemble de liaison selon la revendication 8, **caractérisé en ce que** le au moins un cliquet d'arrêt (260 ; 414 ; 730) est conçu en forme de L et présente une branche de blocage (262 ; 734) et une branche d'actionnement (264 ; 732), une extrémité proximale de la branche d'actionnement (264 ; 732) reposant sur un étage basculant (257) du cylindre de commande (250 ; 720) et une extrémité distale de la branche d'actionnement (264 ; 732) s'appliquant, dans la position de libération, sur un niveau d'actionnement (269) du manchon extérieur (267 ; 706).

10. Ensemble de liaison selon l'une quelconque des revendications 1 ou 8 ou 9, **caractérisé en ce que** le au moins un cliquet d'arrêt (160 ; 260 ; 414 ; 730) est sollicité avec une force de ressort en direction de la position de blocage.

11. Ensemble de liaison selon la revendication 10, **caractérisé par** au moins deux cliquets d'arrêt (260) disposés sur le pourtour de cylindre (250), qui sont reliés l'un à l'autre par des éléments intermédiaires élastiques orientés dans le sens périphérique.

12. Ensemble de liaison selon la revendication 11, **caractérisé en ce que** les cliquets d'arrêt (260) sont conçus ensemble d'une seule pièce à base de plastique et les éléments intermédiaires sous forme de barrettes plastique élastiques.

13. Ensemble de liaison selon l'une quelconque des revendications 1 ou 8 à 12, **caractérisé en ce qu'**au moins deux cliquets d'arrêt (364 ; 414) sont prévus sur une couronne d'arrêt (360) de forme annulaire, la couronne d'arrêt (360) présentant un disque annulaire (362) et des saillies de cliquet d'arrêt disposées perpendiculairement au disque annulaire (362).

14. Ensemble de liaison selon la revendication 13, **caractérisé en ce que** le disque annulaire (362) et les saillies du cliquet d'arrêt sont conçus d'une seule pièce à base de matériau élastique, en particulier du plastique.

15. Ensemble de liaison selon au moins l'une quelconque des revendications précédentes, **caractérisé en ce que** le au moins un cliquet d'arrêt (414) est formé d'une seule pièce sur le cylindre de commande (412 ; 512).

16. Ensemble de liaison selon la revendication 15, **caractérisé en ce que** plusieurs cliquets d'arrêt (414) sont prévus dans une configuration annulaire qui sont formés d'une seule pièce sur une extrémité du cylindre de commande (412 ; 512).

17. Ensemble de liaison selon au moins l'une quelconque des revendications 1 ou 8 à 16, **caractérisé en ce que** le au moins un cliquet d'arrêt (730) présente une branche de blocage (732), une extrémité libre de la branche de blocage (732) pouvant dépasser dans une trajectoire de déplacement du cylindre de commande (716) et l'extrémité libre de la branche de blocage (732) étant trop coudée en direction du cylindre de commande (716).

18. Ensemble de liaison selon au moins l'une quelconque des revendications précédentes, **caractérisé en ce qu'**un flexible de purge (510 ; 728) est prévu, lequel est relié dans la zone des ouvertures de sortie (506 ; 724) au cylindre de sortie (504 ; 716) et dont l'extrémité opposée dépasse à l'intérieur du récipient de départ (520).

19. Ensemble de liaison selon au moins l'une quelconque des revendications précédentes, **caractérisé en ce que** le cylindre de sortie (404 ; 504 ; 716) est réceptionné de façon résistante à la torsion et coulissante axialement dans un manchon extérieur (416 ; 706), le manchon extérieur (416 ;706) pouvant être vissé sur une tubulure de raccordement d'un récipient cible (522 ; 704).

20. Ensemble de liaison selon au moins l'une quelconque des revendications précédentes, **caractérisé en ce que** le cylindre de sortie (404 ; 504) présente une lèvre d'étanchéité (436) périphérique formée d'une seule pièce pour l'étanchéité par rapport à une paroi interne du cylindre de commande (412 ; 512).

21. Ensemble de liaison selon au moins l'une quelconque des revendications précédentes, **caractérisé en ce qu'**une extrémité, dotée des ouvertures de sortie (406 ; 506), du cylindre de sortie (404 ; 504) est dotée d'un plateau d'étanchéité (408 ; 508), dont le bord périphérique s'applique, dans la position de fermeture, sur une paroi interne du cylindre de commande, (412 ; 512)
